# EUROPÄISCHE PATENTANMELDUNG

(11) **EP 4 749 661 A1**
(43) Veröffentlichungstag der Anmeldung: **27.05.2026**
(21) Anmeldenummer: 24222839.3
(22) Anmeldetag: 23.12.2024
(51) Int. Cl.: G21K 1/02

(54) **SCHICHTFÖRMIGE STREUSTRAHLUNGSMASKE**

(30) Priorität: 22.11.2024 EP 24214811
(71) Anmelder: Siemens Healthineers AG, 91301 Forchheim (DE)
(72) Erfinder: Bräuer, Martin, 90427 Nürnberg (DE); Kreuzer, Klaus-Peter, 90768 Fürth (DE)
(74) Vertreter: Siemens Healthineers Patent Attorneys

(57) **Zusammenfassung**

Die vorliegende Erfindung betrifft eine Streustrahlungsmaske zur Reduktion von Röntgenstreustrahlung, insbesondere für eine Röntgenbildgebung, aufweisend einen Schichtstapel, wobei der Schichtstapel eine Röntgenstrahlen-transparente erste Schicht, eine Röntgenstrahlen-absorbierende zweite Schicht und eine Röntgenstrahlen-transparente dritte Schicht aufweist, wobei die erste Schicht, die zweite Schicht und die dritte Schicht jeweils mindestens eine flächige Lage aufweisen, wobei benachbarte Lagen des Schichtstapels mittels eines additiven Herstellungsverfahrens in Stapelrichtung flächig aufeinander aufgetragen sind. Die vorliegende Erfindung betrifft ferner eine Anordnung für eine Röntgenbildgebung, ein Verfahren zur Herstellung einer Streustrahlungsmaske, eine Anlage zur additiven Herstellung einer Streustrahlungsmaske und eine Verwendung einer Anlage mit einer Auftragungseinheit zur additiven Herstellung einer Streustrahlungsmaske.

## Beschreibung

Die Erfindung betrifft eine Streustrahlungsmaske, eine Anordnung für eine Röntgenbildgebung mit der Streustrahlungsmaske, ein Verfahren zur Herstellung einer Streustrahlungsmaske zur Reduktion von Röntgenstreustrahlung, eine Anlage zur additiven Herstellung einer Streustrahlungsmaske zur Reduktion von Röntgenstreustrahlung und die Verwendung einer Anlage mit einer Auftragungseinheit zur additiven Herstellung einer Streustrahlungsmaske zur Reduktion von Röntgenstreustrahlung.

Die vorliegende Erfindung bezieht sich auf das Gebiet der insbesondere medizinischen Röntgenbildgebung, insbesondere auf Streustrahlungsmasken zur Verbesserung der Bildqualität bei Röntgenaufnahmen. In der modernen Röntgendiagnostik ist die Reduzierung von Röntgenstreustrahlung von großer Bedeutung, um kontrastreiche und detailgenaue Aufnahmen zu erhalten. Herkömmliche Streustrahlungsmasken in Streifenform bestehen regelmäßig aus Bleilamellen, die zwischen Röntgenstrahlen-transparenten Materialien, beispielsweise Papierstreifen, angeordnet sind. Diese Technologie hat jedoch Einschränkungen hinsichtlich der erreichbaren Auflösung und Flexibilität in der Herstellung.

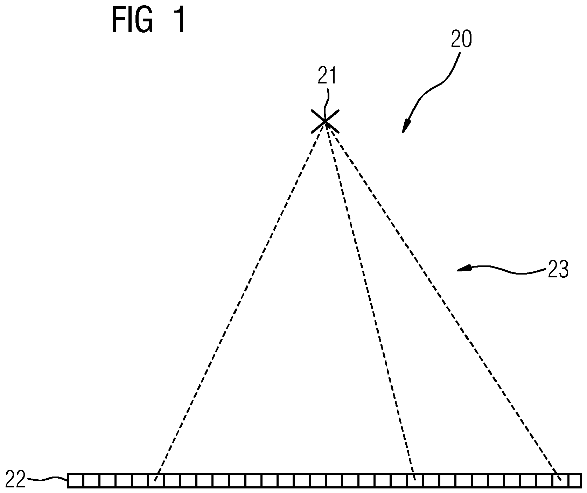

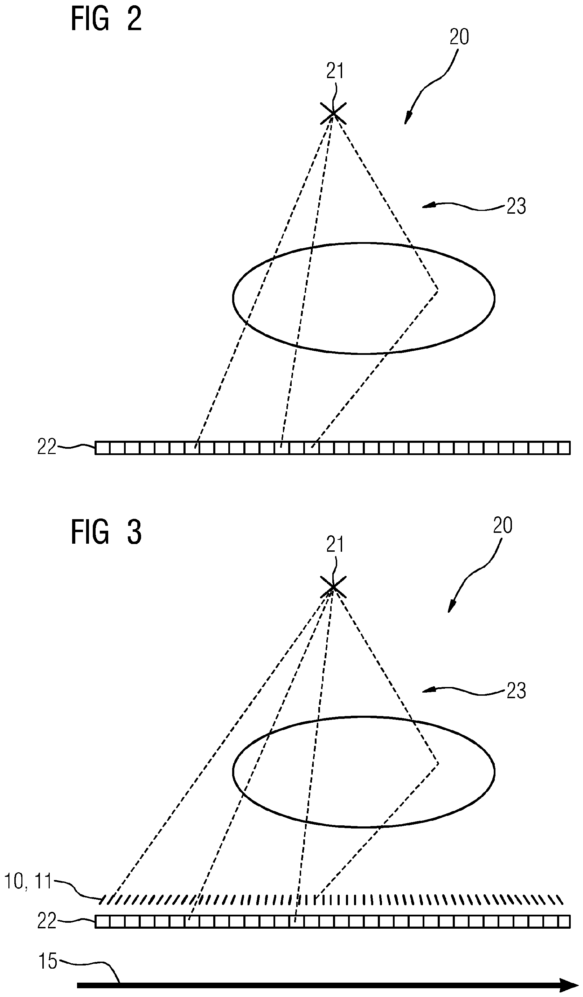

Wie in den Fig. 1 und 2 gezeigt, wird ein Detektor für Röntgenstrahlung nicht nur von (gegebenenfalls abgeschwächten) Röntgenphotonen, sogenannter primärer Röntgenstrahlung, getroffen, sondern auch von gestreuten Röntgenphotonen (Röntgenstreustrahlung). Dieser Streuprozess ist physikalisch bedingt und prinzipiell nicht vermeidbar. Diese sogenannte Röntgenstreustrahlung entsteht in jeglicher von der Röntgenstrahlung getroffenen Materie, insbesondere abhängig von deren Beschaffenheit. Auch und insbesondere wasserhaltige Materialien (wie der menschliche Körper) erzeugen starke Röntgenstreustrahlung. Insbesondere diagnostische Röntgenbilder von Menschen in der Medizin können durch die gestreuten Röntgenphotonen undeutlich werden, da die scharfe Abbildung anatomischer Details durch die diffuse Röntgenstreustrahlung überlagert wird. Für gute Abbildungen feiner Details müssen Röntgenbildgebungsanlagen, insbesondere solche für die Medizintechnik, Röntgenstreustrahlung effizient unterdrücken.

Eine verbreitete Technik zur Unterdrückung von Röntgenstreustrahlung ist die Verwendung einer Streustrahlungsmaske in Gitterform oder in Streifenform. Die Röntgenstrahlen-absorbierenden Strukturen bestehen aus einem Material mit hoher Röntgenstrahlungsschwächungseigenschaft. Dadurch wird sichergestellt, dass nur Röntgenphotonen, die über die direkte Sichtlinie von der (als punktförmig angenommenen) Röntgenstrahlenquelle in den Röntgendetektor gelangen können, während gestreute Röntgenphotonen aufgrund des zu steilen Winkels absorbiert werden.

Die Anforderungen an Streustrahlungsmasken insbesondere für medizinische Röntgenbildgebungsanlagen, sind hoch, da einerseits die gestreuten Röntgenphotonen möglichst vollständig absorbiert werden sollen, andererseits die primäre Röntgenstrahlung möglichst ungehindert den Röntgendetektor erreichen soll. Eine weitere wichtige Anforderung ist, dass die Streustrahlungsmaske im resultierenden Röntgenbild idealerweise nicht sichtbar ist, obwohl durch das Material der Streustrahlungsmaske, insbesondere der Röntgenstrahlen-absorbierenden Schichten, Bereiche des Röntgendetektors abgedeckt werden und damit diese abgedeckten Bereiche nicht von Röntgenphotonen direkt aus der Röntgenstrahlenquelle erreicht werden können. Aus diesem Grund soll die Materialmenge der Röntgenstrahlen-absorbierenden Schichten auf ein absolutes Minimum reduziert werden. Im Idealfall besteht eine Streustrahlungsmaske also aus dünnen Metallstreifen als Röntgenstrahlen-absorbierenden Schichten, die ihrerseits gerade dick genug sind, die Streustrahlung zu absorbieren. Typischerweise werden feine Bleistreifen von z.B. 20 µm Dicke eingesetzt. Beispielsweise haben sich Streifenbreiten von ca. 3 mm in Abständen von ca. 100 µm in der Praxis für sehr hoch-qualitative Röntgenbilder bewährt.

Bleistreifen mit Querschnitten von 0,020 mm x 3 mm und typischen Längen von 400 mm sind jedoch mechanisch vollkommen unstabil. Aus diesem Grund wird zwischen diese Röntgenstrahlen-absorbierenden Schichten ein Füllmaterial eingebracht. Dieses Füllmaterial ist für den Prozess der Röntgenbildgebung unerwünscht, da es Röntgenstrahlung typischerweise wenigstens zu einem geringen Teil absorbiert, also nicht vollständig Röntgenstrahlen-transparent ist. In letzter Konsequenz führt alle Absorption von Röntgenphotonen aus dem Körper zur Notwendigkeit der Erhöhung der zur Untersuchung eingesetzten, potenziell gesundheitsschädlichen Strahlendosis. Ein wichtiges Entwicklungsziel für medizinische Röntgengeräte ist daher die Minimierung der Materialmenge zwischen dem Patienten und dem Röntgendetektor.

Im Medizintechnikmarkt finden sich leichte Metalle, wie z.B. Aluminium, als Füllmittel zwischen den Röntgenstrahlen-absorbierenden Schichten. Diese Lösungen haben jedoch den Nachteil, dass ein solches Füllmaterial eine vergleichsweise hohe Röntgenstrahlungsschwächungseigenschaft aufweist. Technisch lassen sich Schichtstapel mit beispielsweise 20 µm Bleistreifen, die mit beispielsweise 100 µm dicken Aluminiumstreifen abgewechselt und verklebt werden, relativ einfach und effizient fertigen.

Intern bekannt ist beim Röntgenstrahlen-transparenten Füllmaterial ein anderer Weg: Es wird anstelle des Füllmaterials Aluminium für die Röntgenstrahlen-transparenten Schichten das Füllmaterial Papier eingesetzt. Die Papier-Bleistreifen werden verklebt. Die Papier-Klebstoffkombination, mit den wesentlichen chemischen Elementen Wasserstoff, Kohlenstoff und Sauerstoff hat eine deutlich geringere Röntgenabsorption als das sonst verwendete Aluminium. Ein Ersatz des beschriebenen Verfahrens, bei dem auf das giftige Blei und den Naturstoff Papier verzichtet werden kann, ist derzeit nicht bekannt. Das Material Blei, das derzeit als Absorber verwendet wird, ist zunehmend problematisch, da sein Einsatz wegen der Giftigkeit von Blei weitestmöglich zu reduzieren ist, bzw. in Zukunft damit zu rechnen ist, dass der Einsatz von Blei als Material verboten wird. Die Verwendung von Papier als Füllmittel ist jedoch technisch herausfordernd: Papier ist ein Naturstoff, dessen gleichmäßige Qualität nur durch hohen Aufwand sichergestellt werden kann. Papier ist hygroskopisch, deswegen muss die Lagerung und Verarbeitung in exakt Temperatur- und Feuchtigkeits-kontrollierter Umgebung erfolgen. Die Kompatibilität der verwendeten Klebersysteme ist kritisch. Da die Haftung der Kleber/Papierschichten kritisch ist, ist die Festigkeit der fertigen Platten viel geringer als bei anderen Methoden. Um diese Streustrahlungsmasken zu stabilisieren und zu versiegeln, werden diese typischerweise zwischen zusätzliche (absorbierende) Platten aus Vollmaterial eingeklebt.

Aktuelle Systeme zur Streustrahlungsreduktion weisen also mehrere technische Beschränkungen auf. Die Herstellung von Streustrahlungsmasken mit sehr feinen Strukturen ist mit konventionellen Methoden schwierig und kostspielig. Zudem sind die verwendeten Materialien oft nicht optimal auf die spezifischen Anforderungen verschiedener Anwendungen der Röntgenbildgebung abgestimmt. Die mangelnde Flexibilität in der Gestaltung der Streustrahlungsmasken führt zu Kompromissen zwischen Streustrahlenreduktion und Primärstrahlentransmission. Darüber hinaus stellt die Integration von Streustrahlungsmasken in moderne digitale Röntgensysteme eine Herausforderung dar, insbesondere wenn es um die Anpassung an verschiedene Bildgebungsgeometrien geht.

Der Erfindung liegt die Aufgabe zu Grunde, eine Streustrahlungsmaske, eine Anordnung für eine Röntgenbildgebung mit der Streustrahlungsmaske, ein Verfahren zur Herstellung einer Streustrahlungsmaske zur Reduktion von Röntgenstreustrahlung, eine Anlage zur additiven Herstellung einer Streustrahlungsmaske zur Reduktion von Röntgenstreustrahlung und die Verwendung einer Anlage mit einer Auftragungseinheit zur additiven Herstellung einer Streustrahlungsmaske zur Reduktion von Röntgenstreustrahlung anzugeben, welche verbessert sind, vorzugsweise eine verbesserte Streustrahlenreduktion bei gleichzeitig hoher Primärstrahlentransmission ermöglichen, flexibel in der Herstellung und Anpassung an verschiedene Röntgenanwendungen sind und/oder sich einfach in moderne Röntgenbildgebungsanlagen integrieren lassen.

Die Aufgabe wird durch die Merkmale der unabhängigen Ansprüche gelöst. Vorteilhafte Ausgestaltungen sind in den Unteransprüchen beschrieben.

Die erfindungsgemäße Streustrahlungsmaske zur Reduktion von Röntgenstreustrahlung, insbesondere für eine Röntgenbildgebung, weist
- einen Schichtstapel auf,
- wobei der Schichtstapel eine Röntgenstrahlen-transparente erste Schicht, eine Röntgenstrahlen-absorbierende zweite Schicht und eine Röntgenstrahlen-transparente dritte Schicht aufweist,
- wobei die erste Schicht, die zweite Schicht und die dritte Schicht jeweils mindestens eine flächige Lage aufweisen,
- wobei benachbarte Lagen des Schichtstapels mittels eines additiven Herstellungsverfahrens in Stapelrichtung flächig aufeinander aufgetragen sind.

Ein erfindungsgemäßes Verfahren zur Herstellung einer Streustrahlungsmaske zur Reduktion von Röntgenstreustrahlung, insbesondere für eine Röntgenbildgebung, umfasst die Schritte:
- Auftragen mittels eines additiven Herstellungsverfahrens von Lagen flächig aufeinander in Stapelrichtung zu einem Schichtstapel derart,
- dass der Schichtstapel eine Röntgenstrahlen-transparente erste Schicht, eine Röntgenstrahlen-absorbierende zweite Schicht und eine Röntgenstrahlen-transparente dritte Schicht aufweist und
- dass die erste Schicht, die zweite Schicht und die dritte Schicht jeweils mindestens eine flächige Lage aufweisen.

Der erfindungsgemäße Schritt der vorliegenden Erfindung besteht in einer innovativen Betrachtung der Richtung der additiven Fertigung. Denn die Lagen der Röntgenstrahlen-transparenten und Röntgenstrahlen-absorbierenden Schichten werden in Stapelrichtung flächig aufeinander aufgetragen. Die Streustrahlungsmaske wird also gefertigt, indem viele Lagen übereinander zu einem Schichtstapel aufgetragen werden. Vorteilhafterweise werden die Streustrahlungsmasken demnach gefertigt, indem eine erfindungsgemäße Anlage zur additiven Herstellung einer Streustrahlungsmaske so ertüchtigt und eingesetzt wird, dass dünne Lagen von minimaler Dicke aufgetragen werden. Dazu wird die entstehende Streustrahlungsmaske beispielsweise auf einer vertikal beweglichen Platte, die im Verlauf des Fertigungsprozesses abgesenkt und/oder horizontal bewegt wird, aufgebaut. Eine solche Anordnung ist aus dem Bereich der additiven Herstellungsverfahren, z.B. aus dem 3D-Druck, insbesondere als "core xy"-Anordnung bekannt. Grundsätzlich ist es denkbar, aber nicht Teil der Erfindung, die Fertigungsrichtung senkrecht zur Oberseite einzustellen.

Eine Streustrahlungsmaske, regelmäßig auch als Streustrahlenraster oder Raster bezeichnet, dient dazu, unerwünschte Streustrahlung bei der Röntgenbildgebung zu reduzieren. Die Röntgenstreustrahlung entsteht, wenn Röntgenstrahlen mit Materie wechselwirken und in verschiedene Richtungen gestreut werden. Diese gestreute Strahlung kann die Bildqualität in der Röntgendiagnostik erheblich beeinträchtigen, indem sie den Kontrast verringert und Details verwischt. Die Streustrahlungsmaske kann insbesondere in Gitterform oder in Streifenform ausgebildet sein.

Die Streustrahlungsmaske reduziert die einfallende Röntgenstreustrahlung insbesondere dadurch, dass insbesondere die Röntgenstreustrahlung, welche nicht senkrecht auf die Streustrahlungsmaske auftrifft, mit der Röntgenstrahlen-absorbierenden zweiten Schicht und/oder weiteren Röntgenstrahlen-absorbierenden Schichten wechselwirkt und dabei die Röntgenstreustrahlung wenigstens abgeschwächt, vorteilhafterweise möglichst vollständig absorbiert wird. In anderen Worten ist die Anzahl der Röntgenphotonen der Röntgenstreustrahlung hinter der Streustrahlungsmaske im Vergleich zur Anzahl der Röntgenphotonen der Röntgenstreustrahlung vor der Streustrahlungsmaske signifikant reduziert, vorteilhafterweise maximal minimiert.

Im Vergleich dazu passiert insbesondere die primäre Röntgenstrahlung, also in Materie nicht gestreute, sondern höchstens abgeschwächte Röntgenstrahlung idealerweise die Röntgenstrahlen-transparente erste Schicht oder dritte Schicht, insbesondere ohne absorbierende Wechselwirkung mit der zweiten Schicht. In anderen Worten ist die Anzahl der Röntgenphotonen der primären Röntgenstrahlung hinter der Streustrahlungsmaske im Vergleich zur Anzahl der Röntgenphotonen der Röntgenstreustrahlung vor der Streustrahlungsmaske vorteilhafterweise lediglich aufgrund der nicht vermeidbaren physikalischen Wechselwirkungen mit dem Material der zweiten Schicht geringfügig geringer, vorzugsweise im Wesentlichen gleich.

Ob ein Röntgenphoton mittels der Streustrahlungsmaske als Röntgenstreustrahlung absorbiert oder als primäre Röntgenstrahlung transmittiert wird, hängt insbesondere von dem Einfallwinkel der Trajektorie, auf welcher das Röntgenphoton sich befindet, in Bezug zur Oberfläche der Streustrahlungsmaske ab. Bei einer streifenförmigen Streustrahlungsmaske spielt typischerweise zusätzlich die Richtung des Röntgenphotons, beispielsweise parallel zu den Schichten oder senkrecht zu den Schichten, eine Rolle. Die Oberfläche der Streustrahlungsmaske ist insbesondere auf der Oberseite der Streustrahlungsmaske.

Der Schichtstapel bildet die Grundstruktur der Streustrahlungsmaske. Ein Schichtstapel bezeichnet eine Anordnung mehrerer übereinander liegender Lagen mit unterschiedlichen Eigenschaften bezüglich der Röntgenstrahlung, insbesondere der Röntgenstrahlungsschwächungseigenschaft. Die Röntgenstrahlungsschwächungseigenschaft definiert die Absorptionsrate von Röntgenstrahlung. Der Schichtstapel ist insbesondere ein Lagenstapel mit mehreren Lagen unterschiedlicher Eigenschaften. Eine Schicht weist insbesondere benachbarte Lagen mit den gleichen Röntgenstrahlungsschwächungseigenschaften auf. Benachbarten Lagen sind insbesondere solche Lagen, welche unmittelbar aufeinander aufgetragen sind. Benachbarte Lagen mit den gleichen Eigenschaften umgeben insbesondere nicht eine oder mehrere Lagen mit einer unterschiedlichen Eigenschaft. Die mindestens eine Lage der ersten sowie der dritten Schicht und die mindestens eine Lage der zweiten Schicht unterscheiden sich insbesondere in ihrer Röntgenstrahlungsschwächungseigenschaft. Die mindestens eine Lage der ersten sowie der dritten Schicht weisen insbesondere eine vergleichsweise niedrige Röntgenstrahlungsschwächungseigenschaft und somit eine hohe Röntgenstrahlungstransmissionseigenschaft auf. Die mindestens eine Lage der zweiten Schicht weist insbesondere eine vergleichsweise hohe Röntgenstrahlungsschwächungseigenschaft und somit eine niedrige Röntgenstrahlungstransmissionseigenschaft auf.

Die Röntgenstrahlen-transparenten Schichten umfassen jeweils eine oder mehrere benachbarte Röntgenstrahlen-transparente Lagen und ermöglichen eine hohe Transmission der primären Röntgenstrahlung. Die Röntgenstrahlen-absorbierende Schicht umfasst mindestens eine oder mehrere benachbarte Röntgenstrahlen-absorbierende Lagen und absorbiert die Streustrahlung möglichst effektiv.

Eine Röntgenstrahlen-transparente Lage kann aus Materialien mit niedriger Ordnungszahl bestehen, beispielsweise aus Kunststoffen wie Polyethylen, Epoxidharz oder Polypropylen. Diese Materialien weisen eine geringe Röntgenstrahlungsschwächungseigenschaft auf und lassen somit einen Großteil der primären Röntgenstrahlung passieren. Alternativ oder zusätzlich können auch Materialien mit geringer Dichte wie Schäume und/oder Aerogele verwendet werden. Eine gute Möglichkeit stellt insbesondere die Verwendung einer Träger-Matrix aus einem Kunststoff, vorzugsweise Polyethylen, dar, der auch häufig in der additiven Fertigung verwendet wird. Dieser Werkstoff Polyethylen eignet sich zudem ohne Anteil eines Röntgenstrahlen-absorbierenden Materials als Röntgenstrahlen-transparentes Material.

Eine Röntgenstrahlen-absorbierende Lage besteht typischerweise aus Materialien mit hoher Ordnungszahl und hoher Dichte. Beispiele hierfür sind Metalle wie insbesondere Blei oder wie vorzugsweise Wolfram, Tantal, Rhenium, Osmium, Iridium, Bismut, Platin, Thallium, Quecksilber oder Gold. Diese Materialien absorbieren Röntgenstrahlung effektiv und können somit die Röntgenstreustrahlung reduzieren.

Eine flächige Lage bezeichnet eine dünne, ausgedehnte Fläche des jeweiligen Materials. Die Dicke einer solchen Lage kann im Bereich von wenigen Mikrometern bis zu einigen hundert Mikrometern liegen, während die laterale Ausdehnung deutlich größer ist und typischerweise im Bereich von Zentimetern oder mehr liegt. Die Dicke der Lage beschreibt also eine Stärke der Lage. Eine Lage kann in diesem Zusammenhang als eine einzelne, zusammenhängende Fläche des jeweiligen Materials verstanden werden, die in einem einzigen Fertigungsschritt aufgebracht wird. Die Dicke einer solchen Lage kann je nach verwendetem Material und gewünschten Eigenschaften variieren, zwischen den Lagen und/oder innerhalb der Lage. Beispielsweise kann die Dicke der Röntgenstrahlen-absorbierenden Lage im Bereich von 20 bis 200 µm liegen, während die Dicken der Röntgenstrahlen-transparenten Lagen im Bereich von 50 bis 500 µm, vorzugsweise 20 bis 200 µm, liegen können. Die Dicke einer Lage kann je nach verwendetem Material und/oder gewünschten Eigenschaften variieren.

Das additive Herstellungsverfahren ermöglicht die präzise Fertigung komplexer Strukturen durch schichtweises Auftragen von Material, sprich Lage für Lage. Das additive Herstellungsverfahren erfolgt insbesondere mittels der sogenannten "core xy"-Anordnung als Teil der erfindungsgemäßen Anlage. Bei der Herstellung der Streustrahlungsmaske werden die einzelnen Lagen nacheinander aufgebaut, wobei die Lagen für die Röntgenstrahlen-transparenten erste und dritte sowie die Röntgenstrahlen-absorbierende zweite Schicht nacheinander in Stapelrichtung aufgetragen werden. Insbesondere wird die mindestens eine Lage der zweiten Schicht auf die oberste bzw. letzte der bereits gefertigten Lagen der ersten Schicht aufgetragen und danach wird die mindestens eine Lage der dritten Schicht auf die oberste bzw. letzte der bereits gefertigten Lagen der zweiten Schicht aufgetragen. Die Reihenfolge der Fertigung kann auch umgekehrt sein.

Das additive Herstellungsverfahren kann ein schichtweises Aufbauverfahren sein, bei dem die einzelnen Lagen nacheinander aufgetragen werden. Dieses Verfahren kann eine präzise Kontrolle über die Lagendicken und -geometrien ermöglichen. Das Auftragen der Lagen kann durch verschiedene Techniken erfolgen. Eine Möglichkeit kann das selektive Auftragen von Material durch eine Auftragungseinheit, beispielsweise mit einer Auftragungsdüse, sein. Hierbei kann das Material in flüssiger oder pastöser oder Pulverform, insbesondere fest, aufgebracht sein oder anschließend ausgehärtet werden. Eine andere Möglichkeit kann das selektive Verfestigen eines Pulverbetts durch Energieeintrag, beispielsweise durch einen Laser, z.B. durch "selective laser sintering", oder eine andere Energiequelle, sein. Als weitere Methode kann das aufgebrachte Pulver auch durch einen chemischen Prozess, bei dem zusätzliches Material aufgebracht wird, gehärtet werden, beispielsweise durch Auftragen, insbesondere Aufsprühen, einer Flüssigkeit, auch "binder jetting" genannt. Für das Auftragen einer Lage ist es denkbar, dass eine oder beide der Materialzusammensetzungen als Flüssigkeit aufgetragen werden. Insbesondere Röntgenstrahlen-transparente Kunststoffe, wie z.B. Polyethylen, haben typischerweise einen relativ niedrigen Schmelzpunkt von kleiner 300°C, während die Röntgenstrahlen-absorbierenden Materialien, wie beispielsweise Wolfram, vergleichsweise hohe Schmelztemperaturen im Bereich von deutlich oberhalb von 1000°C aufweisen können, z.B. Wolfram 3422°C.

Die Röntgenstrahlen-transparente erste Schicht kann eine oder mehrere Röntgenstrahlen-transparente Lagen aufweisen. Die Röntgenstrahlen-transparente dritte Schicht kann eine oder mehrere Röntgenstrahlen-transparente Lagen aufweisen. Die Röntgenstrahlen-absorbierende zweite Schicht kann eine oder mehrere Röntgenstrahlen-absorbierende Lagen aufweisen. Es ist denkbar, dass die Anzahl je Schicht zwischen den Schichten variiert. Die Anzahl je Schicht kann insbesondere 1, 2 oder M > 2 betragen. Vorzugsweise sind die benachbarten Lagen des Schichtstapels, also die jeweiligen aneinander angrenzenden Lagen verschiedener Schichten und die jeweiligen aneinander angrenzenden Lagen innerhalb einer Schicht, mittels des additiven Herstellungsverfahrens in Stapelrichtung flächig aufeinander aufgetragen.

Es ist bevorzugt, wenn eine Röntgenstrahlen-absorbierende Schicht ausschließlich Röntgenstrahlen-absorbierende Lagen umfasst und wenn eine Röntgenstrahlen-transparente Schicht ausschließlich Röntgenstrahlen-transparente Lagen umfasst. Es ist denkbar, insbesondere in Hinblick auf die Auswahl des Fertigungsverfahrens, dass eine oder mehrere Lagen zwischen einer Röntgenstrahlen-absorbierenden Schicht und einer Röntgenstrahlen-transparenten Schicht eine mittlere Röntgenstrahlungsschwächungseigenschaft aufweisen, beispielsweise auf Grund einer ungewollten Verunreinigung und/oder zur graduellen Einstellung der Röntgenstrahlungsschwächungseigenschaft. Der Betrag der mittleren Röntgenstrahlungsschwächungseigenschaft liegt insbesondere zwischen der niedrigen Röntgenstrahlungsschwächungseigenschaft der Röntgenstrahlen-transparenten Schicht und der hohen Röntgenstrahlungsschwächungseigenschaft der Röntgenstrahlen-absorbierenden Schicht.

Die Streustrahlungsmaske kann insgesamt eine Vielzahl an Schichten mit unterschiedlicher Röntgenstrahlungsschwächungseigenschaft aufweisen. Typischerweise wechseln sich Schichten mit niedriger Röntgenstrahlungsschwächungseigenschaft und Schichten mit hoher Röntgenstrahlungsschwächungseigenschaft insbesondere regelmäßig, vorzugsweise periodisch, in Wechselrichtung ab. Die Wechselrichtung der Schichten bezeichnet insbesondere die Richtung, in welcher sich die Röntgenstrahlen-transparente Schichten und die Röntgenstrahlen-absorbierende Schicht abwechseln. Die Wechselrichtung der Schichten verläuft insbesondere in die Richtung, in welcher sich Materialien, insbesondere Schichten, mit unterschiedlicher Röntgenstrahlungsschwächungseigenschaft abwechseln.

Der Schichtstapel kann zusätzlich zu der ersten, zweiten und dritten Schicht weitere, insbesondere eine Vielzahl an Schichten aufweisen. Beispielsweise grenzt an die Röntgenstrahlen-transparente erste Schicht eine weitere Röntgenstrahlen-absorbierende Schicht an, welche gegenüber von der Röntgenstrahlen-absorbierenden zweiten Schicht ist. Alternativ oder zusätzlich grenzt an die Röntgenstrahlen-transparente dritte Schicht eine andere Röntgenstrahlen-absorbierende Schicht an, welche gegenüber von der Röntgenstrahlen-absorbierenden zweiten Schicht ist.

Die Stapelrichtung der Lagen bezieht sich insbesondere auf die Stapelrichtung des Herstellungsverfahrens, also die Richtung, in der die Lagen übereinander flächig aufgetragen werden. Die Stapelrichtung steht typischerweise senkrecht auf der Ebene der flächigen Lage. Die Stapelrichtung verläuft erfindungsgemäß im Wesentlichen parallel zur Oberseite bzw. Oberfläche der Streustrahlungsmaske. Also verläuft die Stapelrichtung insbesondere nicht senkrecht zur Oberseite bzw. Oberfläche der Streustrahlungsmaske. Erfindungsgemäß entspricht die Wechselrichtung der Schichten der Stapelrichtung der Lagen.

Der große Vorteil der Erfindung liegt also darin, dass die kritischen dünnen Strukturen über die Lagendicke gegeben werden. Besonders vorteilhaft ist, dass die benachbarten Lagen des Schichtstapels in Stapelrichtung sowie gleichzeitig in Wechselrichtung aufgetragen sind bzw. werden, denn die Fläche der einzelnen Lagen kann mit sehr breitem Materialauftrag, beispielsweise größer 100 µm oder im Bereich 0,1 mm bis 1 mm, aber in Dickenrichtung besonders dünn erzeugt werden. Dadurch können vorteilhafterweise äußerst dünne insbesondere Röntgenstrahlen-absorbierende Lagen und somit Röntgenstrahlen-absorbierende Schichten gefertigt werden. Alternativ oder zusätzlich reduziert sich die Fertigungszeit der einzelnen Lage gegenüber der herkömmlichen Praxis, die Lagen senkrecht zur Oberseite der Streustrahlungsmaske und somit senkrecht zur Wechselrichtung aufzubauen. Denn für eine Röntgenstrahlen-absorbierende Schicht ist es herkömmlicherweise insbesondere in üblichen 3D-Druck-Verfahren notwendig gewesen, diese Schicht in 5 oder mehr einzelne Raumpunkte je Lage aufzuteilen, was eine Fertigung des Streustrahlungsmaske mit Maßen von beispielsweise 400 mm x 400 mm im Stand der Technik äußerst aufwändig macht.

Die beschriebene Streustrahlungsmaske kann insgesamt also mehrere technische Vorteile bieten. Durch die Verwendung des additiven Herstellungsverfahrens kann eine sehr präzise Kontrolle über die Lagendicken und -geometrien erreicht werden. Dies kann zu einer verbesserten Effizienz bei der Streustrahlenreduktion führen. Weiterhin kann die Verwendung von alternativen Materialien anstelle von Blei die Umweltverträglichkeit der Streustrahlungsmaske verbessern. Die Möglichkeit, komplexe Strukturen zu fertigen, kann zudem eine Optimierung der Streustrahlenreduktion für spezifische Anwendungen in der Röntgenbildgebung ermöglichen.

Eine Ausführungsform sieht vor, dass eine minimale Strukturgröße innerhalb einer Lage größer ist als eine minimale Dicke dieser Lage. Die minimale Dicke einer Lage kann die geringste Ausdehnung in Stapelrichtung darstellen, die für eine einzelne Lage fertigungstechnisch erreicht werden kann. Ein Beispiel für diese Konfiguration kann eine Lage sein, bei der die minimale Strukturgröße innerhalb der Lage 100 µm beträgt, während die minimale Dicke der Lage 20 µm oder 50 µm sein kann. Im Kern wird in dieser Ausführungsform ein anisotropes additives Herstellungsverfahren beschrieben, bei dem die Lagen sehr dünn, z.B. eine Lagendicke in der Größenordnung von 20 µm ist, während der Materialauftrag in den beiden zur Stapelrichtung orthogonalen Richtungen deutlich gröbere minimale Strukturgrößen größer als 20 µm, beispielsweise im Bereich von 50 µm bis 1000 µm aufweist. Die minimale Strukturgröße kann sich auf die kleinste laterale Abmessung beziehen, die innerhalb einer Lage der Streustrahlungsmaske hergestellt werden kann. Diese Größe kann durch die Auflösung des verwendeten additiven Herstellungsverfahrens bestimmt sein. Beispielsweise kann bei einem 3D-Druck-Verfahren die minimale Strukturgröße durch den Durchmesser des Querschnitts der Auftragungsdüse der Auftragseinheit der Anlage zur additiven Herstellung oder die Präzision der Positionierung der Auftragungseinheit beeinflusst werden. Die minimale Strukturgröße kann alternativ oder zusätzlich von Faktoren wie der Viskosität des verwendeten Materials, der Oberflächenspannung und/oder den Aushärtungseigenschaften abhängen. Beispielsweise kann bei einem Stereolithographie-Verfahren die Schichtdicke durch die Eindringtiefe des aushärtenden Lichts präzise gesteuert werden, während die laterale Auflösung durch den Fokusdurchmesser des Lasers begrenzt sein kann. Alternativ kann bei einem Pulverbett-Fusionsverfahren die Schichtdicke durch die Höhe der aufgetragenen Pulverschicht bestimmt werden, während die minimale Strukturgröße von der Korngröße des Pulvers und der Präzision des Energieeintrags abhängen kann.

Die Beziehung zwischen minimaler Strukturgröße und minimaler Dicke kann verschiedene Auswirkungen auf die Leistung der Streustrahlungsmaske haben. Eine größere minimale Strukturgröße im Vergleich zur minimalen Dicke kann zu einer verbesserten mechanischen Stabilität der Lage führen. Dies kann besonders wichtig für die Röntgenstrahlen-absorbierenden Schichten sein, da diese aus dichteren Materialien bestehen und daher anfälliger für strukturelle Schwächen sein können. Zudem kann diese Ausführungsform eine möglichst geringe Lagendicke bzw. Schichtdicke ermöglichen. Dies kann für die Optimierung der Absorptionseigenschaften der Streustrahlungsmaske von Vorteil sein.

Diese Konfiguration kann eine Optimierung der Streustrahlungsmaske für spezifische Anwendungen in der Röntgenbildgebung ermöglichen.

Eine Ausführungsform sieht vor, dass eine Dicke der zweiten Schicht weniger als 200 µm, insbesondere weniger als 100 µm, vorzugsweise weniger als 50 µm, besonders vorteilhafterweise weniger als 25 µm, beträgt. Die Dicke der Röntgenstrahlen-absorbierenden zweiten Schicht ist ein wichtiger Parameter für die Leistungsfähigkeit der Streustrahlungsmaske. Vorzugsweise kann eine dünnere Schicht die Absorption der primären Röntgenstrahlung minimieren, während gleichzeitig eine effektive Reduzierung der Streustrahlung erreicht wird. Beispiele für spezifische Dicken innerhalb des genannten Bereichs können 160 µm, 100 µm, 50 µm, 40 µm, 25 µm oder 20 µm sein. Eine Dicke von 100 µm kann beispielsweise einen guten Kompromiss zwischen Absorptionsfähigkeit und Gesamtdicke der Streustrahlungsmaske darstellen. Eine Dicke von 100 µm kann eine besonders geringe Absorption der primären Röntgenstrahlung ermöglichen, während eine Dicke von 20 µm zu einer besonders effizienten Streustrahlungsmaske führen kann. Die Wahl der spezifischen Dicke kann von verschiedenen Faktoren abhängen, wie zum Beispiel dem verwendeten Absorptionsmaterial, der gewünschten Streustrahlenreduktion und den spezifischen Anforderungen der Röntgenbildgebungsanwendung. Eine dünnere Röntgenstrahlen-absorbierende Schicht kann auch die Flexibilität der Streustrahlungsmaske erhöhen, was in bestimmten Anwendungen vorteilhaft sein kann. Die Dicke der zweiten Schicht kann die Dicke der mindestens einen Lage der zweiten Schicht nicht unterschreiten. Die Dicke der zweiten Schicht beträgt typischerweise mindestens die Summe der Dicken der Lagen der zweiten Schicht.

Eine Ausführungsform sieht vor, dass die zweite Schicht maximal eine Lage aufweist und/oder wobei die erste Schicht und optional die dritte Schicht jeweils maximal eine Lage aufweisen. In diesem Fall beträgt insbesondere die Dicke der einen Lage weniger als 200 µm, insbesondere weniger als 100 µm. Diese Ausführungsform beschreibt unter anderem eine Streustrahlungsmaske mit einer vereinfachten Schichtstruktur, bei der jede der Schichten - die Röntgenstrahlen-transparente erste Schicht, die Röntgenstrahlen-absorbierende zweite Schicht und die Röntgenstrahlen-transparente dritte Schicht - aus maximal einer Lage besteht. Die Verwendung von maximal einer Lage pro Schicht kann den Herstellungsprozess der Streustrahlungsmaske vereinfachen. Bei einem additiven Herstellungsverfahren kann dies bedeuten, dass jede Schicht in einem einzigen Durchgang aufgetragen wird, was die Fertigungszeit und den Materialverbrauch reduzieren kann. Zudem kann diese Vorgehensweise die Präzision der Schichtdicken erhöhen, da Ungenauigkeiten, die durch das mehrfache Auftragen von Lagen entstehen können, vermieden werden. Da jede Schicht aus einer einzigen Lage besteht, kann die Zusammensetzung und Struktur des Materials innerhalb der Schicht homogener sein, was zu einer gleichmäßigeren Absorption oder Transmission der Röntgenstrahlung führen kann. Eine mögliche Anordnung der Lagen kann wie folgt aussehen: Eine einzelne Lage der Röntgenstrahlen-transparenten ersten Schicht mit einer Dicke von 100 µm, gefolgt von einer einzelnen Lage der Röntgenstrahlen-absorbierenden zweiten Schicht mit einer Dicke von 20 µm, und abschließend eine einzelne Lage der Röntgenstrahlen-transparenten dritten Schicht mit einer Dicke von 100 µm. Durch Variation der Dicke und Zusammensetzung der einzelnen Lagen kann die Maske für spezifische Anwendungen in der Röntgenbildgebung optimiert werden, ohne die Komplexität des Herstellungsprozesses zu erhöhen.

Eine Ausführungsform sieht vor, dass ein Querschnitt einer Lage in Breitenrichtung trapezförmig ausgebildet ist. Ein trapezförmiger Querschnitt kann in diesem Zusammenhang als eine geometrische Form verstanden werden, bei der die obere und untere Kante der Lage parallel zueinander sowie parallel zur Stapelrichtung verlaufen, jedoch unterschiedliche Längen aufweisen. Die Seitenkanten der Lage können dabei schräg verlaufen und die obere mit der unteren Kante verbinden. Die Breitenrichtung steht auf der Stapelrichtung senkrecht sowie auf der Oberseite der Streustrahlungsmaske senkrecht. Die Trapezform ist insbesondere eine Keilstumpfform. Es ist denkbar, dass ein Querschnitt mehrerer Lagen oder aller Lagen in Breitenrichtung trapezförmig ausgebildet ist. Der Querschnitt zweier oder mehrerer Lagen kann verschieden sein, insbesondere mindestens einen unterschiedlichen Innenwinkel aufweisen, sprich nicht deckungsgleich sein. Beispielsweise können die insbesondere trapezförmigen Querschnitte unterschiedlich ausgerichtet, insbesondere geneigt, sein. Die Dickenvariation kann für verschiedene Lagen des Schichtstapels unterschiedlich gestaltet werden. Beispielsweise kann in einer Röntgenstrahlen-transparenten Lage eine andere Dickenvariation verwendet werden als in einer Röntgenstrahlen-absorbierenden Lage. Dies kann eine präzise Abstimmung der Absorptionseigenschaften der Streustrahlungsmaske ermöglichen.

Die trapezförmige Ausbildung des Querschnitts einer Lage kann durch verschiedene Fertigungsmethoden erreicht werden. Bei additiven Herstellungsverfahren kann beispielsweise die Auftragsmenge des Materials während des Auftragens einer Lage gezielt variiert werden, um die gewünschte Trapezform zu erzeugen. Insbesondere kann eine Dicke einer Lage des Schichtstapels mittels des additiven Herstellungsverfahrens in Breitenrichtung variiert werden. Bei einem Verfahren mit flüssigem oder pastösem Materialauftrag kann beispielsweise die Auftragsmenge des Materials entlang der Breitenrichtung der Lage gezielt verändert werden. Dies kann durch Anpassung des Materialflusses, der Bewegungsgeschwindigkeit der Auftragungseinheit oder einer Kombination beider Parameter erfolgen. Bei einem pulverbasierten additiven Herstellungsverfahren kann die Dickenvariation durch selektives Verfestigen unterschiedlicher Mengen von Pulvermaterial in verschiedenen Bereichen der Lage erreicht werden. Dies kann durch Variation der Energiemenge, die zum Verfestigen des Pulvers verwendet wird, oder durch mehrfaches Überfahren bestimmter Bereiche realisiert werden.

Die Neigung der Seitenkanten des Trapezes kann variieren und an die spezifischen Anforderungen der Streustrahlungsmaske angepasst werden. Beispielsweise kann ein Neigungswinkel zwischen 0,1° und 45° gewählt werden. Ein trapezförmiger Querschnitt einer Lage kann verschiedene potenzielle Vorteile für die Leistung der Streustrahlungsmaske bieten. Zum einen kann diese Form zu einer Fokussierung der Streustrahlungsmaske beitragen. Die schrägen Seitenkanten können als eine Art Führung für die Röntgenstrahlen dienen und unerwünschte Röntgenstreustrahlung reduzieren. Wesentlich vorteilhaft ist, wenn die Streustrahlungsmaske derart fokussiert ist, dass insbesondere die Röntgenstrahlen-absorbierenden Schichten der Streustrahlungsmaske auf die Röntgenstrahlenquelle ausgerichtet sind. Dies bedeutet insbesondere, dass Schichten im Zentrum der Streustrahlungsmaske senkrecht zur Oberfläche stehen, während Schichten mit zunehmender Entfernung zum Zentrum immer stärker in Richtung Röntgenstrahlenquelle geneigt sind. Dieser geometrische Zusammenhang ist Fig. 3 dargestellt. Dies kann zu einer erhöhten Bildqualität in der Röntgenbildgebung führen. Die trapezförmige Ausbildung des Querschnitts kann zur Optimierung der Absorptionseigenschaften der Streustrahlungsmaske beitragen. Durch die Variation der Dicke innerhalb einer insbesondere Röntgenstrahlen-absorbierenden Lage kann eine graduelle Änderung der Absorptionseigenschaften erreicht werden. Dies kann besonders nützlich sein, um die Maske an spezifische Röntgenspektren oder Bildgebungsmodalitäten anzupassen. Alternativ oder zusätzlich kann die trapezförmige Form einer Lage dazu beitragen, Reflexionen und Streuungen an den Grenzflächen zwischen den Lagen zu reduzieren. Die Verwendung einer Lage mit trapezförmigem Querschnitt kann insbesondere die Flexibilität in der Gestaltung der Streustrahlungsmaske erhöhen. Durch Variation der Trapezform in verschiedenen Lagen können komplexe dreidimensionale Strukturen innerhalb der Maske erzeugt werden, die an spezifische Anforderungen der Röntgenbildgebung angepasst sind.

Eine Ausführungsform sieht vor, dass die Röntgenstrahlen-transparenten Schichten aus einer ersten Materialzusammensetzung und die Röntgenstrahlen-absorbierende Schicht aus einer zweiten Materialzusammensetzung ausgebildet sind, wobei die erste Materialzusammensetzung und die zweite Materialzusammensetzung bezüglich eines Anteils eines Materials voneinander abweichend ausgebildet sind. Die erste Materialzusammensetzung und die zweite Materialzusammensetzung können insbesondere bezüglich eines Anteils ausschließlich eines Materials oder mehrerer Materialien voneinander abweichend ausgebildet sein. Ein Anteil kann zwischen 0% und 100% liegen. Anteile weichen definitionsgemäß in dieser Ausführungsform voneinander ab, wenn aufgrund der Abweichung die Röntgenstrahlungsabschwächungseigenschaft der ersten Materialzusammensetzung sich von der Röntgenstrahlungsabschwächungseigenschaft der zweiten Materialzusammensetzung derart unterscheidet, dass die erste Materialzusammensetzung Röntgenstrahlen-transparent und dass die zweite Materialzusammensetzung Röntgenstrahlen-absorbierend ist. Eine Materialzusammensetzung umfasst ein einzelnes Material oder eine spezifische Kombination von Materialien, die zusammen die Eigenschaften einer Schicht bestimmen. Insbesondere die erste Materialzusammensetzung kann nur ein Material umfassen, während die zweite Materialzusammensetzung zwei oder mehr Materialien umfassen kann. Sobald eine Materialzusammensetzung ein Material der anderen Materialzusammensetzung nicht umfasst, unterscheiden sich die beiden Materialzusammensetzungen, denn der Anteil des einen Materials ist gleich null bei der einen Materialzusammensetzung und ungleich null bei der anderen Materialzusammensetzung. Die Materialzusammensetzung kann verschiedene Materialien, beispielsweise Elemente, Verbindungen oder Strukturen in unterschiedlichen Anteilen umfassen. Die erste Materialzusammensetzung der Röntgenstrahlen-transparenten Schichten kann beispielsweise aus leichten Materialien mit niedriger Ordnungszahl bestehen. Mögliche Materialien hierfür können Kunststoffe wie Polymere, Polyethylen, Epoxidharz, Polypropylen oder Acrylglas sein. Zusätzlich können diese Materialien mit Additiven oder Füllstoffen versetzt sein, um spezifische Eigenschaften zu erzielen. Die zweite Materialzusammensetzung der Röntgenstrahlen-absorbierenden Schicht kann Materialien mit hoher Ordnungszahl aufweisen. Solche Materialien können Metalle wie Blei, Tantal, Wolfram, Rhenium, Osmium, Iridium, Bismut, Platin, Thallium, Quecksilber oder Gold sein, die in Form von feinen Pulvern oder Nanopartikeln in eine Träger-Matrix, beispielsweise aus Kunststoff, eingebettet sein können.

Eine Ausführungsform sieht vor, dass die erste Materialzusammensetzung Glashohlkugeln und/oder ein Aerogel aufweist. Glashohlkugeln, auch als Mikrohohlglaskugeln oder "Microballons" oder Glasmikrosphären bezeichnet, sind mikroskopisch kleine, hohle Kugeln aus Glas. Diese Kugeln haben typischerweise einen Durchmesser von wenigen Mikrometern, beispielsweise 80 µm, bis zu einigen hundert Mikrometern und bestehen insbesondere aus einer dünnen Glasschale, die ein Gasvolumen oder Vakuum umschließt. Aufgrund ihrer Struktur weisen Glashohlkugeln eine sehr geringe Dichte auf, typischerweise im Bereich von 0,125 bis 0,6 g/cm³. Diese geringe Dichte in Kombination mit den Eigenschaften des Glases macht Glashohlkugeln zu einem hervorragenden Material für Röntgenstrahlen-transparente Schichten. Technisch lassen sich durch Mischen der Glashohlkugeln mit einem Epoxidharz oder mit einem flüssigen, beispielsweise thermoplastischen, Kunststoff ein Material mit sehr geringer Dichte herstellen. Bei hohen Glashohlkugeln-Konzentrationen ergibt sich eine Art Schaum mit einer Dichte von unter der von Wasser (1,0 g/cm3). Vorteilhafterweise werden die Glashohlkugeln für die Streustrahlungsmaskenfertigung zur Dichte- bzw. Absorptionsreduktion an mehreren Stellen eingesetzt: Das Papier wird vollständig durch die Glashohlkugeln ersetzt, z.B. die Glashohlkugeln sind eingebettet in einen thermoplastischen Kunststoff oder ein Epoxidharz gemäß dieser Ausführungsform. Alternativ oder zusätzlich könne Klebermaterialien für Deckschichten und/oder das Material der Deckschichten der Streustrahlungsmasken mit Glashohlkugeln gefüllt werden. Insgesamt ermöglicht die Verwendung der Glashohlkugeln eine sehr deutliche Reduktion der unerwünschten Absorption der primären Röntgenstrahlung in den Röntgenstrahlen-transparenten Schichten. Insbesondere in Kunststoffe eingebettete Glashohlkugeln ermöglichen durch die erreichbare sehr geringe Dichte die deutliche Reduktion von Absorption von primärer Röntgenstrahlung. Insbesondere der Ersatz des Problem-behafteten Naturstoffs "Papier" durch einen mit Glashohlkugeln gefüllten Kunststoff erlaubt es, Streustrahlungsmasken wesentlich effektiver und zuverlässiger zu fertigen.

Für die Herstellung von Schichten mit Glashohlkugeln kann eine Methode verwendet werden, bei der die Glashohlkugeln in eine Träger-Matrix, insbesondere aus einem Kunststoff eingebettet werden. Dies kann durch Mischen der Glashohlkugeln mit dem Kunststoff, insbesondere einem flüssigen Kunststoff, und durch anschließendes Aushärten erfolgen. Alternativ können die Glashohlkugeln auch in ein Pulverbett eingebracht und anschließend durch Sintern oder Schmelzen verbunden werden.

Alternativ oder zusätzlich lassen sich Glashohlkugeln-gefüllte Werkstoffe auch durch Aerogele mit noch geringer Dichte ergänzen oder ersetzen. Aerogele sind hochporöse Festkörper mit einer geringen Dichte. Sie bestehen zu einem Großteil aus Luft (oft über 95% des Volumens) und weisen eine netzartige Struktur aus miteinander verbundenen Nanopartikeln auf. Aerogele können aus verschiedenen Materialien hergestellt werden, wobei Silica-Aerogele die bekanntesten sind. Die geringe Dichte und die offene Struktur machen Aerogele ebenfalls zu einem ausgezeichneten Material für Röntgenstrahlen-transparente Schichten. Diese Aerogele stehen typischerweise in deutlich größeren Stärken von einigen mm zur Verfügung. Es ist denkbar, Aerogele in der additiven Fertigung, insbesondere beim 3D-Druck einzusetzen. Insbesondere Aerogel-Schichten im Bereich von 100 µm Dicke stellen eine Ergänzung oder Alternative zur Verwendung von Glashohlkugeln dar.

Bei der Verwendung von Aerogelen kann eine Sol-Gel-Methode angewendet werden, bei der zunächst ein Gel hergestellt und anschließend durch überkritische Trocknung das Lösungsmittel entfernt wird, ohne die Porenstruktur zu zerstören. Eine alternative Methode ist die Gefriertrocknung, bei der das Lösungsmittel durch Sublimation entfernt wird.

In beiden Fällen kann das additive Herstellungsverfahren angepasst werden, um die speziellen Eigenschaften dieser Materialien optimal zu nutzen.

Die Verwendung von Glashohlkugeln und/oder Aerogelen in der ersten Materialzusammensetzung kann die Röntgentransparenz der entsprechenden Schichten erheblich verbessern, also die Röntgenstrahlungsschwächungseigenschaft verringen zugunsten einer höheren Röntgenstrahlungstransmissionseigenschaft, was wiederum die Effizienz der Streustrahlungsmaske erhöhen kann. Dies liegt daran, dass beide Materialien einen hohen Anteil an Luft oder Gas enthalten, welche Röntgenstrahlen nahezu ungehindert passieren lassen. Gleichzeitig können diese Materialien die mechanische Stabilität und andere wichtige Eigenschaften der Schichten positiv beeinflussen. Insbesondere kann die geringe Dichte dieser Materialien zu einer Reduktion des Gesamtgewichts der Streustrahlungsmaske beitragen, was in bestimmten Anwendungen vorteilhaft sein kann. Beispielsweise können spezielle Auftragungsdüsen verwendet werden, die eine gleichmäßige Verteilung der Glashohlkugeln oder eine kontrollierte Abscheidung des Aerogels ermöglichen.

Eine Ausführungsform sieht vor, dass die zweite Materialzusammensetzung Blei, Tantal, Wolfram, Rhenium, Osmium, Iridium, Bismut, Platin, Thallium, Quecksilber oder Gold aufweist. Besonders vorteilhafterweise werden diese Elemente, also die genannten Metalle der 6. Periode, in die beschriebene Träger-Matrix eingebettet und in der erfindungsgemäßen Anlage zur additiven Fertigung eingesetzt. Hierdurch besteht vorzugsweise fast völlige Freiheit der geometrischen Gestaltung von Streustrahlungsmasken. Die zweite Materialzusammensetzung bildet insbesondere die Röntgenstrahlen-absorbierende Schicht der Streustrahlungsmaske. Die Verwendung der vorgenannten Materialien mit hoher Ordnungszahl und hoher Dichte ist entscheidend für eine effektive Absorption von Röntgenstrahlung. Die genannten Elemente weisen diese Eigenschaften auf und können daher besonders geeignet für den Einsatz in der Röntgenstrahlen-absorbierenden Schicht sein.

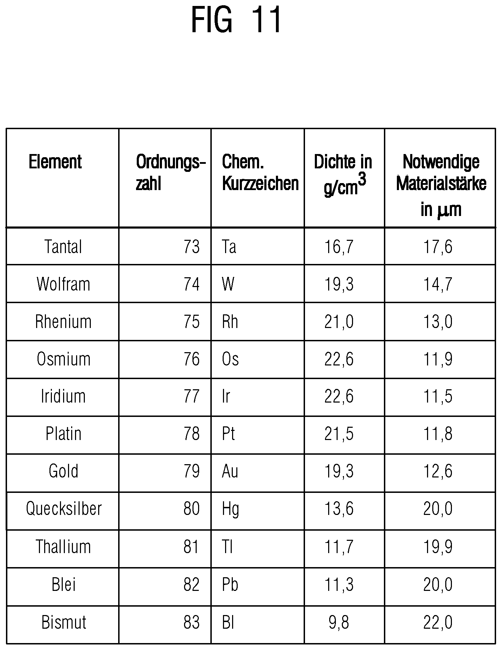

Blei kann aufgrund seiner hohen Dichte von etwa 11,3 g/cm³ und seiner guten Absorptionseigenschaften für Röntgenstrahlung verwendet werden. Blei als Element der 6. Periode im Periodensystem weist die höchste für Röntgenstrahlenabsorption relevante Kernladungszahl auf. Aufgrund der zunehmend niedrigen Kernladungszahlen kommen als Ersatz für Blei insbesondere folgende stabile Elemente der 6. Periode in Frage, unter gewissen Bedingungen auch Thallium und Quecksilber trotz deren Toxizität. Insbesondere kommen damit die bevorzugten Elemente Tantal, Wolfram, Rhenium, Osmium, Iridium, Bismut, Platin oder Gold als Ersatz für Blei in Frage. Neben der Ordnungszahl der bevorzugten Elemente ist deren Dichte sehr relevant. Bei gegebener Materialstärke für Blei (beispielsweise 20 µm), lässt sich die benötigte Materialstärke, für die bevorzugten Elemente, berechnen. Die Ergebnisse der Berechnungen sind in Fig. 11 aufgezeigt. Tantal weist eine höhere Dichte von etwa 16,7 g/cm^3 als Blei auf. Wolfram kann mit einer Dichte von etwa 19,3 g/cm^3 eine hervorragende Absorptionsfähigkeit für Röntgenstrahlung bieten. Rhenium kann mit einer Dichte von etwa 21,0 g/cm^3 eine sehr hohe Absorptionsfähigkeit aufweisen. Osmium weist die höchste Dichte von etwa 22,6 g/cm3 unter den genannten Elementen auf. Iridium kann mit einer Dichte von etwa 22,6 g/cm^3 ebenfalls eine sehr hohe Absorptionsfähigkeit aufweisen. Platin kann mit einer Dichte von etwa 21,5 g/cm^3 eine ausgezeichnete Absorptionsfähigkeit für Röntgenstrahlung bieten. Gold kann mit einer Dichte von etwa 19,3 g/cm^3 eine sehr gute Absorptionsfähigkeit aufweisen. Quecksilber weist mit 13,6 g/cm^3 und Thallium mit 11,7 g/cm^3 eine höhere Dichte als Blei auf, während die Dichte von Bismut mit 9,8 g/cm^3 niedriger ist.

Es ergibt sich, dass alle oben genannten bevorzugten Elemente vorteilhafter als Blei einsetzbar sind, denn es ergeben sich bei gleichzeitiger Abschirmwirkung geringere Materialstärken. Von den genannten Elementen kommt vor allem Wolfram aufgrund seines relativ geringen Preises für einen Einsatz in Betracht. Speziell die Elemente Osmium, Gold und Platin können aufgrund ihrer vergleichsweise hohen Preise aus kommerziellen Gründen für die Verwendung in Streustrahlungsmasken ausscheiden.

Die Einbettung dieser Materialien in die Streustrahlungsmaske kann auf verschiedene Weise erfolgen. Eine Möglichkeit kann die Einbettung von feinen Pulvern oder Nanopartikeln dieser Materialien in eine Träger-Matrix oder Legierungen mit solchen Materialien sein.

Die Verwendung dieser Materialien in der zweiten Materialzusammensetzung kann verschiedene Vorteile bieten. Zum einen kann eine hohe Absorptionseffizienz erreicht werden, was zu einer effektiven Reduktion der Streustrahlung führen kann. Zum anderen kann durch die Wahl des Materials und der Verarbeitungsform die Dicke der absorbierenden Schicht optimiert werden, was zu einer Verringerung der Gesamtdicke der Streustrahlungsmaske führen kann. Darüber hinaus kann die Verwendung von alternativen Materialien zu Blei die Umweltverträglichkeit der Streustrahlungsmaske verbessern.

Mit bekannten Verfahren können viele Metalle chemisch bzw. elektrochemisch aus wässeriger Lösung abgeschieden werden. Bei der konkreten Wahl des Elementes, ist es wichtig, dass sich das Element industriell abscheiden lässt. Hier ist insbesondere Gold trotz des hohen Preises eine gute Alternative, da entsprechende Verfahren, Gold abzuscheiden in der elektrotechnischen Industrie zur Veredelung von Kontaktflächen gut etabliert sind. Elektrochemisch können aus wässeriger Lösung nur Elemente der 6. Gruppe von Rhenium bis Bismut abgeschieden werden. Wolfram lässt aufgrund seiner chemischen Beschaffenheit nicht aus wässriger Lösung abscheiden. Rhenium kommt erfindungsgemäß für eine elektrolytische Abscheidung in Frage und hat auch den niedrigsten Preis der oben genannten Metalle. Wolfram lässt sich jedoch mit neu bekannt gewordenen Verfahren (siehe Dominik Höhlich et. al.: Simultaneous Electrodeposition of Silver and Tungsten from [EMIm]CI:AICI3 lonic Liquids outside the Glove Box; Coatings 2020, 10(6), 553; https://doi.org/10.3390/coatings10060553, DOI: 10.7395/2020/Hoehlich und die Patentschrift DE 10 2014 118 593 A1) zusammen mit Nickel oder Silber aus ionischer (nicht-wässeriger) Lösung abscheiden. Insbesondere ist eine entsprechende Abscheidung von Wolfram oder Wolfram in Verbindung mit einem anderen Metall möglich.

Wolfram kommt als relativ preiswertes Element in Frage. Da auch Tantal als Material ungiftig ist und es noch eine leicht bessere Röntgenstrahlungsschwächungseigenschaft als Blei aufweist, kann es auch als Material für die Röntgenstrahlen-absorbierenden Schichten vorgesehen werden. Insbesondere können Wolfram-Rhenium-Legierungen eingesetzt werden. Vorteil dieser Legierungen ist, dass das Mischungsverhältnis der beiden Elemente typischerweise keine Rolle bei der Röntgenstrahlungsschwächungseigenschaft spielt, denn diese ist für beide Elemente fast identisch. Eine weitere Möglichkeit stellen gut formbare Legierungen aus Wolfram mit beispielsweise Kupfer, Nickel und/oder Eisen dar. Da diese Legierungen technisch mit typischen Wolframgehalten von 90% bis 95% angeboten werden, führt die geringere Röntgenstrahlungsschwächungseigenschaft der beigemischten leichten Elemente, z.B. hat Kupfer auf das Volumen bezogen etwa 9% des Absorptionsvermögens von Blei, typischerweise nur zu einer geringen Zunahme der notwendigen Dicke der Röntgenstrahlen-absorbierenden Schichten.

Alternativ zu den Legierungen mit den bevorzugten Elementen können Mischungen von Pulvern der bevorzugten Elemente mit anderen Bindersubstanzen zur Herstellung der Röntgenstrahlen-absorbierenden Schichten verwendet werden. Als Binder oder Matrix-Material kommen sowohl Metalle wie insbesondere Silber oder Zinn in Frage, als auch Kunststoffe. Die Einbettung von Wolframpulver in Zinn ist bekannt aus DE 60 2004 000 309 T2. Alternativ eignen sich insbesondere Kunststoffe als Material zur Einbettung von Wolframpulver. Es sind kommerziell Materialien mit einem Wolframpulver-Gehalt von über 90% in einer Träger-Matrix aus Polyethylen verfügbar. Diese Materialien weisen Dichten von bis zu 15g/cm^3 auf.

Eine Ausführungsform sieht vor, dass die erste Materialzusammensetzung eine Kunststoff-Matrix aufweist und die zweite Materialzusammensetzung die gleiche Kunststoff-Matrix aufweist. Die Kunststoff-Matrix ist insbesondere eine Träger-Matrix aus Kunststoff. Dass beide Materialzusammensetzungen die gleiche Kunststoff-Matrix aufweisen, bedeutet nicht, dass die beiden Materialzusammensetzungen identisch sind. Die beiden Materialzusammensetzungen können zusätzlich jeweils ein Material aufweisen, welches in der jeweils anderen Materialzusammensetzung nicht enthalten ist. Es ist denkbar, dass die erste Materialzusammensetzung aus der Kunststoff-Matrix besteht und die zweite Materialzusammensetzung einen Anteil größer null an einem Röntgenstrahlen-absorbierenden Metall, wie z.B. den zuvor genannten Materialien, aufweist, welches in die gleiche Kunststoff-Matrix eingebettet ist. Die Kunststoff-Matrix bezeichnet ein polymeres Material, das als Grundstruktur oder Bindemittel für andere Materialien dient. In der Streustrahlungsmaske dieser Ausführungsform wird diese Träger-Matrix sowohl in den Röntgenstrahlen-transparenten Schichten als auch in der Röntgenstrahlen-absorbierenden Schicht verwendet. Insbesondere für die Röntgenstrahlen-transparenten Schichten kann die Kunststoff-Matrix aus einem Material mit niedriger Ordnungszahl bestehen. Diese Materialien weisen eine geringe Absorption von Röntgenstrahlung auf und können daher eine hohe Transmission der primären Röntgenstrahlung ermöglichen. In den Röntgenstrahlen-absorbierenden Schichten wird in dieser Ausführungsform die gleiche Kunststoff-Matrix verwendet, jedoch insbesondere mit Zusätzen von Materialien mit hoher Ordnungszahl. Diese Zusätze können insbesondere in Form von feinen Pulvern oder Nanopartikeln in die Matrix eingebettet werden. Vorzugsweise können Wolfram- oder Tantalpulver in die Kunststoff-Matrix eingearbeitet werden, um die Röntgenabsorption zu erhöhen. Die Verwendung der gleichen Kunststoff-Matrix in beiden Materialzusammensetzungen kann mehrere Vorteile bieten. Zunächst kann eine verbesserte Haftung zwischen den Schichten erreicht werden, da die chemische Kompatibilität zwischen den Materialien erhöht wird. Dies kann zu einer verbesserten strukturellen Integrität der gesamten Streustrahlungsmaske führen. Weiterhin kann die Verwendung der gleichen Matrix die Herstellung der Streustrahlungsmaske vereinfachen. Bei additiven Fertigungsverfahren kann beispielsweise das gleiche Grundmaterial für alle Schichten verwendet werden, wobei lediglich ein Zusatz oder die Zusätze für die Röntgenstrahlen-absorbierende Schicht variiert werden. Dies kann den Fertigungsprozess effizienter gestalten und mögliche Kompatibilitätsprobleme zwischen verschiedenen Matrixmaterialien vermeiden. Zudem kann die Verwendung einer einheitlichen Matrix zu einer gleichmäßigeren thermischen Ausdehnung der verschiedenen Schichten führen. Dies kann thermische Spannungen und mögliche Verformungen der Streustrahlungsmaske bei Temperaturänderungen reduzieren. Die Wahl der spezifischen Kunststoff-Matrix kann von verschiedenen Faktoren abhängen, wie beispielsweise der gewünschten mechanischen Stabilität, der Verarbeitbarkeit im additiven Fertigungsprozess und der Kompatibilität mit den verwendeten Zusatzmaterialien für die absorbierende Schicht.

Idealerweise weist die Maschine mindestens zwei Auftragsdüsen auf, mit der unterschiedliche Materialien aufgetragen werden: Ein möglichst stark Röntgenstrahlen-absorbierendes Material mit einer der beiden Auftragsdüsen und ein möglichst Röntgenstrahlen-transparentes Material mit der anderen der beiden Auftragsdüsen. Grundsätzlich ist es denkbar, dass mit beiden Auftragsdüsen gleichzeitig, nacheinander und Lage für Lage abwechselnd entweder Röntgenstrahlen-absorbierendes Material oder Röntgenstrahlen-transparentes Material aufgetragen wird.

Durch einen abwechselnden Lagenaufbau der beiden Materialien entsteht die Streustrahlungsmaske. Als stark Röntgenstrahlen-absorbierendes Material kommt vorzugsweise eine schmelzbare Matrix, die zu einem hohen Anteil mit feinem Wolframpulver oder anderen Pulver von Elementen der 6. Periode des Periodensystems der Elemente gefüllt ist, in Frage. Röntgenstrahlen-absorbierend bedeutet insbesondere möglichst Röntgenstrahlen-dicht im Vergleich zu Röntgenstrahlen-transparent.

Eine Ausführungsform sieht vor, dass eine Lage der ersten Schicht und/oder der dritten Schicht in Breitenrichtung einen Röntgenstrahlen-absorbierenden Streifen aufweist. Der mindestens eine Röntgenstrahlen-absorbierende Streifen bedeckt maximal bis zu 50%, beispielsweise weniger als 30% die Röntgenstrahlen-transparente Lage. Die Röntgenstrahlen-absorbierenden Streifen können in die ansonsten Röntgenstrahlen-transparenten Schichten integriert sein. Diese Streifen können aus dem gleichen Material bestehen wie die Röntgenstrahlen-absorbierende zweite Schicht oder aus einem anderen Material mit hoher Röntgenabsorption. Die Streifen können beispielsweise durch selektives Auftragen des absorbierenden Materials während des additiven Herstellungsprozesses erzeugt werden. Die Röntgenstrahlen-absorbierenden Streifen können sich über die gesamte Breitenrichtung der Lage erstrecken oder nur über einen Teil davon. Der Zweck dieser zusätzlichen absorbierenden Streifen kann darin bestehen, die Streustrahlenreduktion in einer weiteren Dimension zu verbessern. Während die Röntgenstrahlen-absorbierende zweite Schicht hauptsächlich Streustrahlung in einer Richtung reduziert, können die zusätzlichen Streifen in den Röntgenstrahlen-transparenten Lagen Röntgenstreustrahlung in einer dazu orthogonalen Richtung reduzieren. Die Leistung der Streustrahlungsmaske kann durch diese Konfiguration in mehrfacher Hinsicht beeinflusst werden. Zum einen kann eine verbesserte Streustrahlenreduktion in zwei Dimensionen erreicht werden, was zu einer höheren Bildqualität in der Röntgenbildgebung führen kann. Zum anderen kann die Flexibilität in der Gestaltung der Streustrahlungsmaske erhöht werden, da die Dichte und/oder Anordnung der Röntgenstrahlen-absorbierenden Streifen an spezifische Anforderungen angepasst werden kann. Insbesondere kann dadurch die Streustrahlungsmaske die Gitterform aufweisen. Die Ausdehnung in Breitenrichtung sowie Längenrichtung und der Abstand der Röntgenstrahlen-absorbierenden Streifen können variiert werden, um die gewünschten Absorptionseigenschaften zu erzielen. Beispielsweise können die Streifen eine Ausdehnung in Längsrichtung der Lage von 50 bis 500 µm aufweisen und in Abständen von 1 bis 10 mm angeordnet sein. Die Dicke des Streifens kann der Dicke der Lage entsprechen, in die sie integriert ist, oder davon abweichen. Die Integration des Röntgenstrahlen-absorbierenden Streifens in die Röntgenstrahlen-transparente Schicht kann durch verschiedene Methoden erfolgen. Bei additiven Fertigungsverfahren kann das absorbierende Material gezielt an den gewünschten Positionen aufgetragen werden. Alternativ können vorgefertigte absorbierende Streifen in die transparenten Schichten eingebettet werden. Diese Konfiguration kann eine Optimierung der Streustrahlungsmaske für spezifische Anwendungen in der Röntgenbildgebung ermöglichen. Durch Anpassung der Streifengeometrie und -anordnung kann die Maske an verschiedene Bildgebungsmodalitäten und Untersuchungsobjekte angepasst werden. Die beschriebene Ausführungsform weist also zusammengefasst folgende Vorteile auf: In die Lage aus Röntgenstrahlentransparentem Material können durch Ansteuerung der Anlage zur additiven Herstellung einzelne Streifen aus Röntgenstrahlen-absorbierenden Material integriert werden. Auch wenn diese Streifen prozessbedingt in Längsrichtung eine größere Ausdehnung aufweisen können als die Lagendicke, insbesondere aufgrund der anisotropen minimalen Strukturgröße, können Streustrahlungsmasken in Gitterform gefertigt werden. Da die Lage und Anzahl der absorbierenden Streifen in den einzelnen Röntgenstrahlen-transparenten Lagen beliebig vorgegeben werden kann, kann eine Streustrahlungsmaske, deren Geometrie optimal auf die geplanten Einsatzmöglichkeiten angepasst ist, gefertigt werden.

Eine Ausführungsform sieht vor, dass sich Röntgenstrahlen-absorbierende Streifen von benachbarten Lagen zu einer N-eckigen Struktur mit N ungleich 4 zusammensetzen. Eine N-eckige Struktur bezeichnet in diesem Zusammenhang eine geometrische Form mit N Ecken und N Seiten, die durch die Anordnung der Röntgenstrahlen-absorbierenden Streifen in benachbarten Lagen gebildet wird. Der Begriff "N ungleich 4" bedeutet, dass die Anzahl der Ecken und Seiten nicht vier beträgt, sondern eine andere ganze Zahl größer als zwei sein kann. Insbesondere ist die N-eckige Struktur kein Rechteck oder Quadrat. Beispiele für solche N-eckigen Strukturen können Dreiecke (N=3), Fünfecke (N=5), Sechsecke (N=6) oder komplexere Polygone mit einer höheren Anzahl von Ecken sein. Ein Streustrahlungsmaske dieser Ausführungsform weist eine Gitterform auf. Die spezifische Wahl von N kann von den gewünschten Absorptionseigenschaften und der beabsichtigten Anwendung der Streustrahlungsmaske abhängen. Die Bildung dieser N-eckigen Strukturen kann durch eine präzise Anordnung der Röntgenstrahlen-absorbierenden Streifen in aufeinanderfolgenden Lagen erreicht werden. Beispielsweise können in einer ersten Lage Streifen an einer bestimmten Position in Bezug auf die Längenausdehnung angeordnet sein, während in der darüberliegenden Lage die Streifen an einer dazu versetzten Position angeordnet ist. Durch die Überlagerung dieser Streifen können sich die N-eckigen Strukturen ergeben.

Diese Ausführungsform kann die Leistung der Streustrahlungsmaske in mehrfacher Hinsicht beeinflussen. Zum einen kann eine verbesserte Streustrahlenreduktion in verschiedenen Richtungen erreicht werden, da die N-eckigen Strukturen Streustrahlung aus unterschiedlichen Winkeln absorbieren können. Zum anderen kann diese Anordnung zu einer gleichmä-ßigeren Verteilung der Absorption über die Fläche der Streustrahlungsmaske führen, was potenzielle Artefakte in der Röntgenbildgebung reduzieren kann.

Die Herstellung einer solchen Streustrahlungsmaske mit N-eckigen Strukturen kann durch additive Fertigungsverfahren realisiert werden. Bei diesen Verfahren können die Röntgenstrahlen-absorbierenden Streifen in jeder Lage präzise positioniert werden, um die gewünschten N-eckigen Strukturen zu erzeugen. Diese Methoden können eine hohe Präzision bei der Erzeugung der N-eckigen Strukturen ermöglichen. Die Größe der N-eckigen Strukturen kann variiert werden, um die Absorptionseigenschaften der Streustrahlungsmaske an spezifische Anforderungen anzupassen. Kleinere Strukturen können eine feinere Kontrolle der Streustrahlenreduktion ermöglichen, während größere Strukturen möglicherweise einfacher zu fertigen sind und insgesamt weniger Röntgenstrahlenabsorption verursachen.

Eine erfindungsgemäße Anordnung für eine Röntgenbildgebung weist
- eine erfindungsgemäße Streustrahlungsmaske,
- eine Röntgenstrahlenquelle,
- einen Röntgendetektor und
- einen Untersuchungsbereich zwischen der Röntgenstrahlenquelle und dem Röntgendetektor auf,
- wobei die Streustrahlungsmaske zwischen dem Untersuchungsbereich und dem Röntgendetektor angeordnet und derart ausgerichtet ist, dass die Stapelrichtung des Schichtstapels parallel zum Röntgendetektor ist.

Eine Röntgenstrahlenquelle kann eine Vorrichtung sein, die Röntgenstrahlung erzeugt. Die Röntgenstrahlenquelle kann dazu ausgebildet sein, Röntgenstrahlung mit einer bestimmten Energie oder einem bestimmten Energiespektrum zu erzeugen. Die Röntgenstrahlenquelle kann insbesondere ein Röntgenstrahler sein. Der Röntgenstrahler umfasst insbesondere ein evakuiertes Gehäuse, in welchem insbesondere eine Anode und eine Kathode angeordnet sind. Die Kathode umfasst insbesondere einen Elektronenemitter, von welchem freie Elektronen in Richtung der Anode beschleunigt werden können. Beim Auftreffen der beschleunigten Elektronen auf der Anode wird insbesondere die Röntgenstrahlung generiert. Der Elektronenemitter kann insbesondere ein kalter, beispielsweise ein Feldeffektemitter, oder ein thermionischer, beispielsweise ein Wendel- oder Blechemitter sein. Ein Röntgendetektor kann eine Vorrichtung sein, die Röntgenstrahlung detektiert und in ein elektrisches Signal umwandelt. Der Röntgendetektor kann beispielsweise ein Flachdetektor, ein Zeilendetektor oder ein Einzelpixeldetektor sein. Der Röntgendetektor kann aus verschiedenen Materialien wie Szintillatoren in Kombination mit Photodetektoren oder direktkonvertierenden Halbleitermaterialien bestehen. Ein Untersuchungsbereich kann ein Raum oder Volumen zwischen der Röntgenstrahlenquelle und dem Röntgendetektor sein, in dem ein zu untersuchendes Objekt platziert werden kann. Das zu untersuchende Objekt kann beispielsweise ein menschlicher Körper, ein Tier, ein technisches Bauteil oder ein beliebiger anderer Gegenstand sein. Für die Röntgenbildgebung befindet sich typischerweise ein Patient in dem Untersuchungsbereich. Die Anordnung der Komponenten kann so gestaltet sein, dass die Röntgenstrahlenquelle Röntgenstrahlung emittiert, die durch den Untersuchungsbereich hindurch auf den Röntgendetektor trifft. Die Streustrahlungsmaske kann zwischen dem Untersuchungsbereich und dem Röntgendetektor positioniert sein, um Streustrahlung zu reduzieren, die im Untersuchungsbereich entsteht.

Da die erfindungsgemäße Anordnung die erfindungsgemäße Streustrahlungsmaske aufweist, teilt sie die zuvor beschriebenen Vorteile. Die Ausrichtung der Streustrahlungsmaske mit der Stapelrichtung des Schichtstapels parallel zum Röntgendetektor kann dazu dienen, die Effizienz der Streustrahlenreduktion zu optimieren. Die beschriebene Anordnung für eine Röntgenbildgebung kann eine verbesserte Bildqualität ermöglichen, indem die Streustrahlung effektiv reduziert wird. Die präzise Positionierung und Ausrichtung der Streustrahlungsmaske in Bezug auf den Röntgendetektor und den Untersuchungsbereich kann zu einer optimierten Streustrahlenreduktion bei gleichzeitiger Minimierung der Absorption der primären Röntgenstrahlung führen.

Die erfindungsgemäße Anordnung kann insbesondere für eine medizinische oder technische Röntgenbildgebung geeignet sein. Anwendungen der medizinischen Röntgenbildgebung sind insbesondere eine Angiographie, eine Computertomographie, eine Mammographie und/oder eine Durchleuchtungsradiographie. Anwendungen der technischen Röntgenbildgebung können insbesondere eine Werkstoffprüfung, Sicherheitskontrolle und/oder eine Zollprüfung sein.

Eine Röntgenbildgebungsanlage kann die erfindungsgemäße Anordnung sowie beispielsweise mindestens einen Steuerrechner umfassen, welcher die Röntgenstrahlenquelle für die Röntgenbildgebung ansteuern kann. Die Röntgenbildgebungsanlage kann insbesondere für die medizinische und/oder technische Röntgenbildgebung ausgebildet sein.

Eine erfindungsgemäße Anlage zur additiven Herstellung einer Streustrahlungsmaske zur Reduktion von Röntgenstreustrahlung, insbesondere für eine Röntgenbildgebung, weist eine Auftragungseinheit auf, welche dazu ausgebildet ist, das erfindungsgemäße Herstellungsverfahren durchzuführen.

Eine Auftragungseinheit kann eine Vorrichtung sein, die dazu ausgebildet ist, Material schichtweise aufzutragen, um eine dreidimensionale Struktur zu erzeugen. Die Auftragungseinheit kann verschiedene Komponenten umfassen, wie beispielsweise einen oder mehrere Auftragungsdüsen, Extruder oder andere Mechanismen zum präzisen Auftragen von Material. Die Auftragungseinheit kann dazu ausgebildet sein, verschiedene Materialien zu verarbeiten und aufzutragen. Diese Materialien können Röntgenstrahlen-transparente Materialien der ersten Materialzusammensetzung für die erste und dritte Schicht sowie Röntgenstrahlen-absorbierende Materialien der zweiten Materialzusammensetzung für die zweite Schicht umfassen. Die Auftragungseinheit kann über Mechanismen verfügen, um zwischen verschiedenen Materialien zu wechseln oder mehrere Materialien gleichzeitig aufzutragen. Die Anlage kann so konfiguriert sein, dass die Auftragungseinheit Lagen flächig aufeinander in Stapelrichtung zu einem Schichtstapel aufträgt. Dabei kann die Anlage sicherstellen, dass der Schichtstapel eine Röntgenstrahlen-transparente erste Schicht, eine Röntgenstrahlen-absorbierende zweite Schicht und eine Röntgenstrahlen-transparente dritte Schicht aufweist, wobei jede dieser Schichten mindestens eine flächige Lage aufweist. Die Anlage kann Steuerungsmechanismen umfassen, die es ermöglichen, die Dicke der aufgetragenen Lagen präzise zu kontrollieren. Dies kann besonders wichtig sein für die Herstellung von Streustrahlungsmasken mit sehr dünnen absorbierenden Schichten. Die Anlage kann über Positionierungssysteme verfügen, die eine präzise Bewegung der Auftragungseinheit in drei Dimensionen ermöglichen. Dies kann eine genaue Kontrolle über die Geometrie und Struktur der hergestellten Streustrahlungsmaske ermöglichen. Die Anlage kann auch Systeme zur Überwachung und Qualitätskontrolle des Herstellungsprozesses umfassen. Diese können beispielsweise Sensoren zur Messung der Schichtdicke oder zur Überprüfung der Materialzusammensetzung beinhalten. Eine solche Anlage zur additiven Herstellung einer Streustrahlungsmaske kann eine hohe Flexibilität in der Herstellung ermöglichen. Die Geometrie und Zusammensetzung der Streustrahlungsmaske kann leicht angepasst werden, um verschiedene Anforderungen in der Röntgenbildgebung zu erfüllen. Zudem kann die additive Fertigung die Herstellung komplexer interner Strukturen ermöglichen, die mit konventionellen Fertigungsmethoden schwer zu realisieren wären. Zusätzlich kann die Anlage dazu ausgebildet sein, die Dicke einer Lage des Schichtstapels in Breitenrichtung zu variieren. Dies kann durch präzise Steuerung des Materialauftrags während des additiven Herstellungsprozesses erreicht werden, beispielsweise durch Anpassung des Materialflusses und/oder der Bewegungsgeschwindigkeit der Auftragungseinheit.

Eine Ausführungsform sieht vor, dass die Auftragungseinheit mindestens eine Auftragungsdüse mit einem ovalen oder rechteckigen Querschnitt aufweist. Der Querschnitt der Auftragungsdüse betrifft die Öffnung der Auftragungsdüse, aus welcher das Material austritt. Die Querschnitte mehrerer Auftragungsdüsen können sich in Form und/oder Größe unterscheiden. Eine Auftragungsdüse mit einem ovalen oder rechteckigen Querschnitt kann mehrere Vorteile für den Herstellungsprozess und die resultierende Struktur der Streustrahlungsmaske bieten. Im Gegensatz zu einer konventionellen runden Düse kann eine ovale oder rechteckige Düse eine breitere Materialbahn in einem einzelnen Durchgang auftragen. Dies kann die Fertigungszeit reduzieren und die Effizienz des Herstellungsprozesses erhöhen. Der ovale oder rechteckige Querschnitt der Auftragungsdüse kann es ermöglichen, Materialschichten mit einer kontrollierten Breite und Dicke aufzutragen. Die Form der Düse kann so gewählt werden, dass die aufgetragene Materialbahn der gewünschten Geometrie der Streustrahlungsmaske entspricht. Beispielsweise kann eine rechteckige Düse mit einem Seitenverhältnis von 10:1 eine Materialbahn auftragen, die 10 mal so breit wie dick ist.

Die Verwendung einer ovalen oder rechteckigen Auftragungsdüse kann auch zur Verbesserung der Oberflächenqualität der hergestellten Streustrahlungsmaske beitragen. Durch den breiteren Materialauftrag können Oberflächenunebenheiten, die durch das schichtweise Auftragen entstehen können, reduziert werden. Dies kann zu einer glatteren Oberfläche der Streustrahlungsmaske führen, was für die Leistung in der Röntgenbildgebung vorteilhaft sein kann. Zudem kann die Form der Auftragungsdüse an die spezifischen Anforderungen der verschiedenen Schichten der Streustrahlungsmaske angepasst werden. Für die Röntgenstrahlen-transparenten Lagen kann beispielsweise eine breitere Auftragungsdüse verwendet werden, um eine schnelle Abdeckung großer Flächen zu ermöglichen. Für die Röntgenstrahlen-absorbierenden Lagen kann eine schmalere Düse eingesetzt werden, um eine präzisere Kontrolle über die Schichtdicke zu gewährleisten.

Die ovale oder rechteckige Form der Auftragungsdüse kann auch dazu beitragen, die innere Struktur der Streustrahlungsmaske zu optimieren. Durch gezielte Ausrichtung der Auftragungsdüse während des Auftragens können Materialstränge erzeugt werden, die in einer bestimmten Richtung orientiert sind. Dies kann genutzt werden, um die Absorptionseigenschaften der Maske in verschiedenen Richtungen zu steuern. Eine Anlage zur additiven Herstellung einer Streustrahlungsmaske mit einer Auftragungseinheit, die mindestens eine Auftragungsdüse mit ovalem oder rechteckigem Querschnitt aufweist, kann eine verbesserte Kontrolle über den Herstellungsprozess und die resultierende Maskenstruktur ermöglichen. Dies kann zu einer Optimierung der Leistung der Streustrahlungsmaske in der Röntgenbildgebung beitragen, insbesondere durch die Fokussierung der Streustrahlungsmaske.

Eine Ausführungsform sieht vor, dass die Anlage eine Kippvorrichtung aufweist und dass die Auftragungseinheit sowie die Kippvorrichtung derart angeordnet sind, dass mittels der Kippvorrichtung ein Kippwinkel der Auftragungseinheit relativ zu einer bereits aufgetragenen Lage veränderbar ist. Die Kippvorrichtung kann ein mechanisches System sein, das es ermöglicht, die Auftragungseinheit um eine oder mehrere Achsen zu neigen. Diese Kippvorrichtung kann beispielsweise aus Gelenken, Scharnieren oder Schwenkvorrichtungen bestehen, die eine präzise Kontrolle über den Winkel der Auftragungseinheit erlauben. Die Anordnung der Auftragungseinheit und der Kippvorrichtung kann so gestaltet sein, dass eine Veränderung des Kippwinkels der Auftragungseinheit relativ zu einer bereits aufgetragenen Lage möglich ist. Dies bedeutet, dass die Auftragungseinheit in verschiedenen Winkeln zur Oberfläche der zuletzt aufgetragenen Materialschicht positioniert werden kann. Durch die Kippachse der Kippvorrichtung kann die beispielsweise auf einer vertikal beweglichen Platte entstehende Streustrahlungsmaske mit unterschiedlichen Kippwinkeln relativ zu der Fläche, in der sich die Auftragungseinheit bewegt, mittels der Kippvorrichtung verkippbar sein. Alternativ oder zusätzlich kann die Auftragungseinheit gegen die Horizontale mittels der Kippvorrichtung verkippbar sein. Die Veränderung des Kippwinkels kann durch eine manuelle Einstellung oder durch eine automatisierte Steuerung erfolgen. Eine automatisierte Steuerung kann beispielsweise durch Servomotoren oder Stellantriebe realisiert werden, die mit einer Steuerungseinheit verbunden sind. Diese Steuerungseinheit kann den Kippwinkel basierend auf vorprogrammierten Parametern oder in Echtzeit während des Fertigungsprozesses anpassen. Der veränderbare Kippwinkel der Auftragungseinheit kann es ermöglichen, fokussierte Streustrahlungsmasken herzustellen. Bei einer fokussierten Streustrahlungsmaske sind die absorbierenden Strukturen so ausgerichtet, dass sie auf einen bestimmten Punkt, typischerweise die Röntgenquelle, ausgerichtet sind. Dies kann durch eine graduelle Änderung des Winkels der aufgetragenen Lagen erreicht werden.

Durch die Verwendung der Kippvorrichtung kann der Winkel jeder aufgetragenen Lage präzise gesteuert werden. Beispielsweise kann der Kippwinkel so eingestellt werden, dass die Lagen im Zentrum der Maske parallel zur Oberfläche aufgetragen werden, während die Lagen zum Rand hin zunehmend geneigt sind. Dies kann zu einer verbesserten Effizienz der Streustrahlungsmaske führen, da die absorbierenden Strukturen optimal zur Röntgenquelle ausgerichtet sind. Zudem kann die Kippvorrichtung dazu beitragen, die Oberflächenqualität der hergestellten Streustrahlungsmaske zu verbessern. Durch Anpassung des Kippwinkels kann der Materialauftrag so gesteuert werden, dass Überhänge oder Unterschneidungen vermieden werden, was zu einer glatteren Oberfläche und einer verbesserten strukturellen Integrität der Maske führen kann. Die Verwendung einer Kippvorrichtung in der Anlage zur additiven Herstellung einer Streustrahlungsmaske kann eine erhöhte Flexibilität und Präzision im Herstellungsprozess ermöglichen. Dies kann zu einer verbesserten Leistung der Streustrahlungsmaske in der Röntgenbildgebung beitragen, indem die Geometrie und Ausrichtung der absorbierenden Strukturen optimal an die spezifischen Anforderungen der jeweiligen Anwendung angepasst werden können.

Eine erfindungsgemäße Verwendung einer Anlage mit einer Auftragungseinheit zur additiven Herstellung einer Streustrahlungsmaske zur Reduktion von Röntgenstreustrahlung, insbesondere für eine Röntgenbildgebung, ist ebenfalls Teil der Erfindung. Diese Verwendung bezieht sich auf den Einsatz der zuvor beschriebenen Anlage oder anderer Anlagen mit einer Auftragungseinheit zur additiven Herstellung für das Verfahren zur Herstellung der erfindungsgemäßen Streustrahlungsmaske. Jede Anlage mit einer solchen Auftragungseinheit kann typischerweise dazu verwendet werden, die verschiedenen Schichten der Streustrahlungsmaske präzise und effizient aufzubauen.

Bei der Beschreibung der Vorrichtung erwähnte Merkmale, Vorteile oder alternative Ausführungsformen sind ebenso auf das Verfahren zu übertragen und umgekehrt. Mit anderen Worten können Ansprüche auf das Verfahren mit Merkmalen der Vorrichtung weitergebildet sein und umgekehrt. Insbesondere kann die erfindungsgemäße Vorrichtung in dem Verfahren verwendet werden.

Ausführungsbeispiele der Erfindung sind in den Zeichnungen dargestellt und werden im Folgenden näher beschrieben. In unterschiedlichen Figuren werden für gleiche Merkmale die gleichen Bezugszeichen verwendet.

Es zeigen:
Fig. 1 eine schematische Darstellung einer Anordnung für eine Röntgenbildgebung;
Fig. 2 eine schematische Darstellung einer Anordnung für eine Röntgenbildgebung mit einem Objekt im Untersuchungsbereich;
Fig. 3 eine schematische Darstellung einer erfindungsgemäßen Anordnung für eine Röntgenbildgebung mit einer Streustrahlungsmaske;
Fig. 4 eine perspektivische Ansicht einer erfindungsgemäßen Streustrahlungsmaske zur Reduktion von Röntgenstreustrahlung;
Fig. 5 eine perspektivische Detailansicht einer erfindungsgemäßen Streustrahlungsmaske zur Reduktion von Röntgenstreustrahlung;
Fig. 6 eine perspektivische Detailansicht eines ersten Ausführungsbeispiels der Streustrahlungsmaske;
Fig. 7 ein Flussdiagramm eines erfindungsgemäßen Verfahrens;
Fig. 8 eine perspektivische Ansicht einer erfindungsgemäßen Anlage zur additiven Herstellung einer Streustrahlungsmaske;
Fig. 9 eine schematische Seitenansicht eines ersten Ausführungsbeispiels der Anlage;
Fig. 10 eine schematische Seitenansicht eines zweiten Ausführungsbeispiels der Anlage und
Fig. 11 eine Tabelle mit Materialien für die Röntgenstrahlen-absorbierenden Schichten.

**Fig. 1** zeigt eine schematische Darstellung einer Anordnung 20 für eine Röntgenbildgebung.

Die Anordnung 20 weist eine Röntgenstrahlenquelle 21 und einen Röntgendetektor 22 auf. Die Röntgenstrahlenquelle 21 ist oberhalb des Röntgendetektors 22 angeordnet. Zwischen der Röntgenstrahlenquelle 21 und dem Röntgendetektor 22 ist ein Untersuchungsbereich 23 vorgesehen, in dem ein zu untersuchendes Objekt platziert werden kann, aber in Fig. 1 nicht platziert ist. Der Röntgendetektor 22 ist unterhalb des Untersuchungsbereichs 23 positioniert.

Die von der Röntgenstrahlenquelle 21 emittierte Röntgenstrahlung kann durch den Untersuchungsbereich 23 hindurch auf den Röntgendetektor 22 treffen. Der Weg der Röntgenstrahlen von der Röntgenstrahlenquelle 21 zum Röntgendetektor 22 ist durch gestrichelte Linien dargestellt. Die Röntgenstrahlen der Fig. 1 sind ausschließlich primäre Röntgenstrahlen, weil sie nicht in einem Objekt gestreut werden. Die Trajektorien der Röntgenphotonen sind also schnurgerade.

**Fig. 2** zeigt eine schematische Darstellung einer Anordnung 20 für eine Röntgenbildgebung mit einem Objekt im Untersuchungsbereich 23.

Das Objekt ist als ovale Form dargestellt. Ein Teil der mit den gestrichelten Linien dargestellten Röntgenstrahlen wird im Objekt gestreut. Auf den Röntgendetektor 22 trifft neben der primären Röntgenstrahlung zusätzlich Röntgenstreustrahlung auf. Gestreute Röntgenphotonen weisen in Fig. 2 eine gestrichelte Linie mit einem Knick auf.

**Fig. 3** zeigt eine schematische Darstellung einer erfindungsgemäßen Anordnung 20 für eine Röntgenbildgebung mit einer Streustrahlungsmaske 10.

Die erfindungsgemäße Anordnung 20 weist die Röntgenstrahlenquelle 21, den Untersuchungsbereich 23, eine Streustrahlungsmaske 10 und den Röntgendetektor 22 auf. Der Untersuchungsbereich 23 ist zwischen der Röntgenstrahlenquelle 21 und dem Röntgendetektor 22. Die Streustrahlungsmaske 10 ist zwischen dem Untersuchungsbereich 23 und dem Röntgendetektor 22 angeordnet und derart ausgerichtet ist, dass die Stapelrichtung 15 des Schichtstapels 11 parallel zum Röntgendetektor 22 ist. Unterhalb des Untersuchungsbereichs 23 ist die Streustrahlungsmaske 10 angeordnet. Am unteren Teil der Darstellung ist der Röntgendetektor 22 angeordnet, der so positioniert ist, dass er insbesondere primäre Röntgenstrahlen detektieren kann, die durch den Untersuchungsbereich 23 und die Streustrahlungsmaske 10 hindurchgehen. Ein Querschnitt mindestens einer Lage in Breitenrichtung ist trapezförmig ausgebildet.

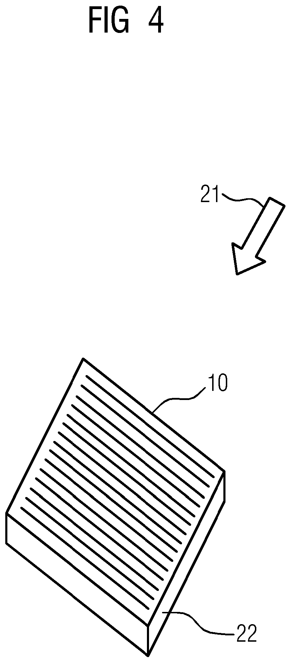

**Fig. 4** zeigt eine perspektivische Ansicht einer erfindungsgemäßen Streustrahlungsmaske 10 zur Reduktion von Röntgenstreustrahlung.

Die Streustrahlungsmaske 10 der Fig. 4 weist eine Streifenform auf. Unterhalb der Streustrahlungsmaske 10 ist der Röntgendetektor 22 angedeutet. Oberhalb der Streustrahlungsmaske 10 ist die Röntgenstrahlenquelle 21 mit einem Pfeil gekennzeichnet.

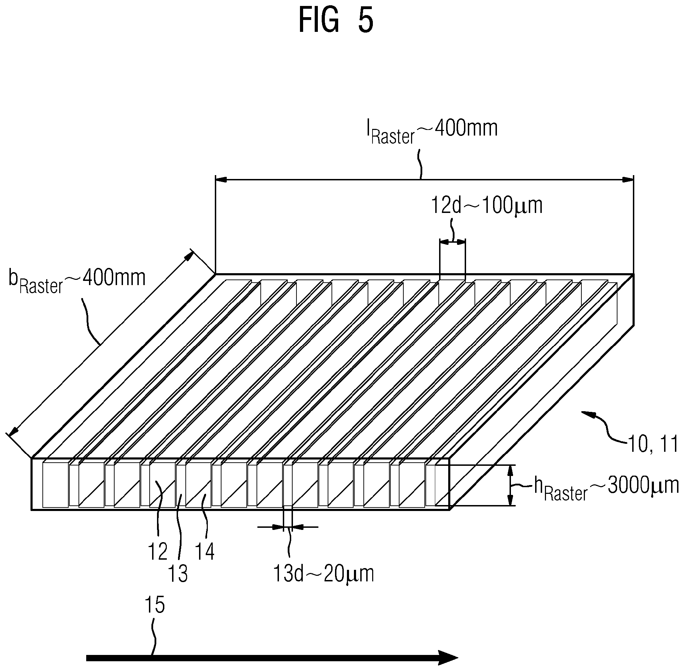

**Fig. 5** zeigt eine perspektivische Detailansicht einer erfindungsgemäßen Streustrahlungsmaske 10 zur Reduktion von Röntgenstreustrahlung.

Die Streustrahlungsmaske 10 weist einen Schichtstapel 11 auf. Der Schichtstapel 11 weist eine Röntgenstrahlen-transparente erste Schicht 12, eine Röntgenstrahlen-absorbierende zweite Schicht 13 und eine Röntgenstrahlen-transparente dritte Schicht 14 auf. Die erste Schicht 12, die zweite Schicht 13 und die dritte Schicht 14 weisen jeweils mindestens eine flächige Lage auf. Benachbarte Lagen des Schichtstapels 11 sind mittels eines additiven Herstellungsverfahrens in Stapelrichtung 15 flächig aufeinander aufgetragen.

Die Gesamtabmessungen der Streustrahlungsmaske 10 in Fig. 5 betragen etwa 400 mm in der Länge l_{Raster} und 400 mm in der Breite b_{Raster} betragen, mit einer Gesamthöhe h_{Raster} von etwa 3000 µm. Die Gesamtabmessung der Streustrahlungsmasken 10 können deutlich von den angegebenen Werten abweichen und sind in erster Linie von den Eigenschaften der Anlage zur additiven Fertigung nach oben oder unten hin beschränkt. Vorteilhafterweise bietet die Erfindung die Möglichkeit, Streustrahlungsraster in jeder Größe in Abhängigkeit von der Größe des Röntgendetektors zu fertigen.

Die Röntgenstrahlen-transparenten Schichten 12, 14 in Fig. 5 weisen eine Dicke 12d von etwa 100 µm auf, während die Röntgenstrahlen-absorbierende Schicht 13 dünner ist, mit einer Dicke 13d von etwa 20 µm. Derartige Schichten können in einem alternierenden Muster über die gesamte Länge der Streustrahlungsmaske 10 angeordnet sein. Fig. 5 zeigt also ferner, dass eine Dicke 13d der zweiten Schicht 13 weniger als 200 µm, insbesondere weniger als 100 µm, beträgt. Bei diesem Ausführungsbeispiel kann eine minimale Strukturgröße innerhalb einer Lage größer sein als eine minimale Dicke dieser Lage.

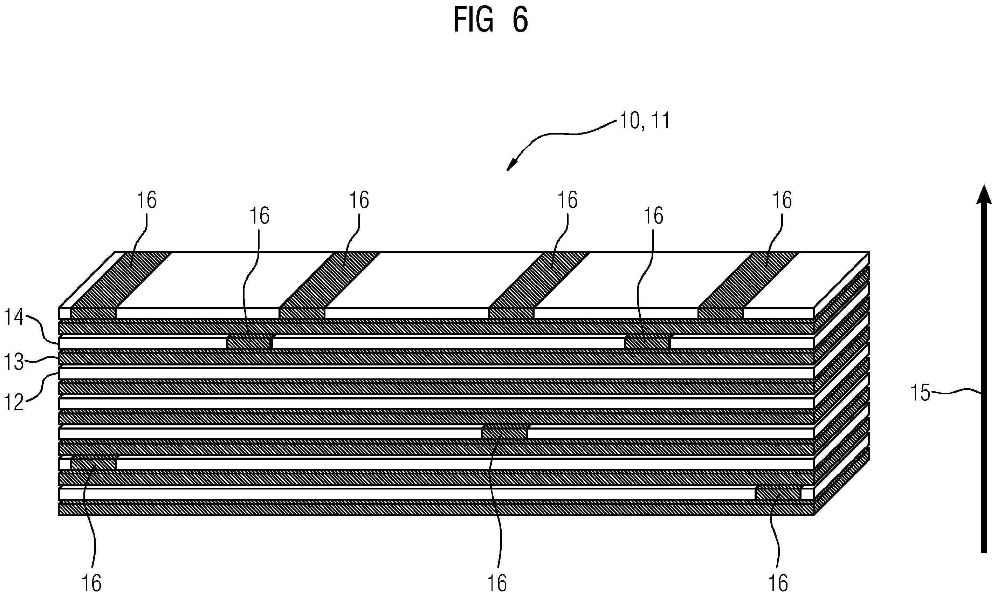

**Fig. 6** zeigt eine perspektivische Detailansicht eines ersten Ausführungsbeispiels der Streustrahlungsmaske 10.

Mindestens eine Lage der ersten Schicht 12 und/oder der dritten Schicht 14 in Breitenrichtung weist einen Röntgenstrahlen-absorbierenden Streifen 16 auf. Fig. 6 zeigt, dass in einigen der Röntgenstrahlen-transparenten Schichten Röntgenstrahlen-absorbierende Streifen 16 angeordnet sind. Diese Streifen 16 können in regelmäßigen Abständen entlang der Länge der jeweiligen Lagen positioniert sein. Die Röntgenstrahlen-absorbierenden Streifen 16 können in verschiedenen Lagen des Schichtstapels 11 auftreten und ein Muster bilden, das sich sowohl horizontal als auch vertikal durch die Struktur erstreckt. Gemäß einer vorteilhaften Weiterbildung können sich die Röntgenstrahlen-absorbierende Streifen 16 von benachbarten Lagen zu einer N-eckigen Struktur mit N ungleich 4 zusammensetzen.

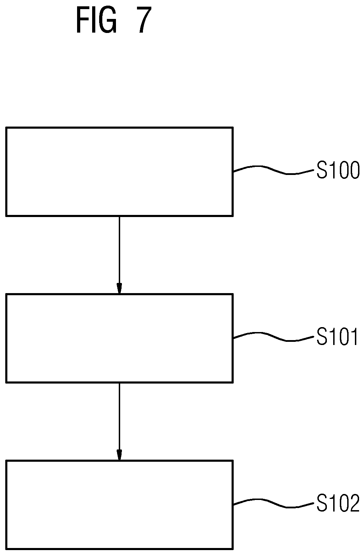

**Fig. 7** zeigt ein Flussdiagramm eines erfindungsgemäßen Verfahrens mit den Schritten S100 bis S102. Das in Fig. 7 dargestellte Verfahren bzw. einzelne oder alle Verfahrensschritte S100 bis S102 können wiederholt durchgeführt werden, um einen Schichtstapel 11 mit mehreren Röntgenstrahlen-transparenten Schichten und mehreren Röntgenstrahlen-absorbierenden Schichten zu erzeugen und so eine Streustrahlungsmaske 10 mit der gewünschten Gesamtlänge l_{Raster} herzustellen.

Verfahrensschritte S100 bis S102 kennzeichnen ein Auftragen mittels eines additiven Herstellungsverfahrens von Lagen flächig aufeinander in Stapelrichtung zu einem Schichtstapel derart,
- dass der Schichtstapel 11 eine Röntgenstrahlen-transparente erste Schicht 12, eine Röntgenstrahlen-absorbierende zweite Schicht 13 und eine Röntgenstrahlen-transparente dritte Schicht 14 aufweist und
- dass die erste Schicht 12, die zweite Schicht 13 und die dritte Schicht 14 jeweils mindestens eine flächige Lage aufweisen. Bei einem oder jedem der Verfahrensschritte S100 bis S102 kann grundsätzlich eine Dicke einer Lage des Schichtstapels 11 mittels des additiven Herstellungsverfahrens in Breitenrichtung variiert werden, insbesondere um einen Querschnitt dieser Lage in Breitenrichtung trapezförmig auszubilden.

Insbesondere zeigt Verfahrensschritt S100 ein Auftragen mittels eines additiven Herstellungsverfahrens von mindestens einer Röntgenstrahlen-transparenten Lage der ersten Schicht 12. Insbesondere zeigt Verfahrensschritt S101 ein Auftragen mittels eines additiven Herstellungsverfahrens von mindestens einer Röntgenstrahlen-absorbierenden Lage der zweiten Schicht 13 flächig auf die mindestens eine Lage der ersten Schicht 12 zu einem Schichtstapel. Insbesondere zeigt Verfahrensschritt S103 ein Auftragen mittels eines additiven Herstellungsverfahrens von mindestens einer Röntgenstrahlen-absorbierenden Lage der dritten Schicht 14 flächig auf die mindestens eine Lage der zweiten Schicht 13 zu einem Schichtstapel. Dieses Ausführungsbeispiel zeigt also insbesondere die Möglichkeit, dass die zweite Schicht 13 maximal eine Lage aufweist und/oder dass die erste Schicht 12 und optional die dritte Schicht 14 jeweils maximal eine Lage aufweisen.

Die Röntgenstrahlen-transparenten Schichten 12, 14 sind oder werden aus einer ersten Materialzusammensetzung und die Röntgenstrahlen-absorbierende Schicht 13 ist oder wird aus einer zweiten Materialzusammensetzung ausgebildet, wobei die erste Materialzusammensetzung und die zweite Materialzusammensetzung bezüglich eines Anteils eines Materials voneinander abweichend ausgebildet sind. Die erste Materialzusammensetzung kann Glashohlkugeln und/oder ein Aerogel aufweisen. Alternativ oder zusätzlich kann die zweite Materialzusammensetzung Blei, Tantal, Wolfram, Rhenium, Osmium, Iridium, Bismut, Platin, Thallium, Quecksilber oder Gold aufweisen. Es ist denkbar, dass die erste Materialzusammensetzung eine Kunststoff-Matrix aufweist und die zweite Materialzusammensetzung die gleiche Kunststoff-Matrix aufweist.

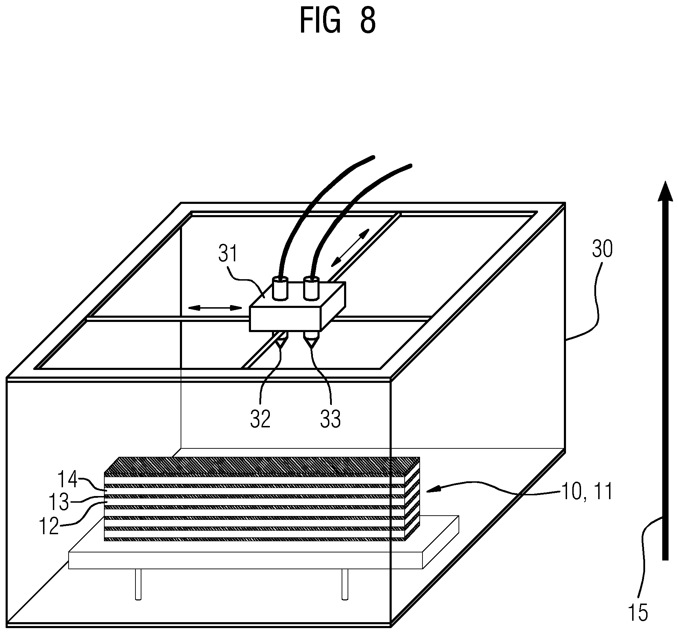

**Fig. 8** zeigt eine perspektivische Ansicht einer erfindungsgemäßen Anlage 30 zur additiven Herstellung einer Streustrahlungsmaske 10.

Die Anlage 30 weist eine Auftragungseinheit 31 auf, welche dazu ausgebildet ist, ein erfindungsgemäßes Herstellungsverfahren zur Herstellung der Streustrahlungsmaske 10 durchzuführen. Die Anlage 30 kann mehrere Komponenten aufweisen, die in einer vertikalen Konfiguration angeordnet sein können. Am unteren Teil der Anlage 30 kann eine Platte angeordnet sein wie in Fig. 8 dargestellt, die den Schichtstapel 11 tragen und insbesondere vertikal bewegen kann. Dies kann eine Anpassung des Abstands zwischen der Auftragungseinheit 31 und dem Schichtstapel 11 ermöglichen, wenn Lagen aufgetragen werden. Oberhalb des Schichtstapels 11 kann wie in Fig. 8 dargestellt eine Rahmenstruktur angeordnet sein. Diese Rahmenstruktur kann parallel zur Platte positioniert sein und in einer horizontalen Ebene beweglich sein, was durch einen Doppelpfeil angedeutet ist. An der Rahmenstruktur kann die Auftragungseinheit 31 montiert sein. Die Anlage 30 der Fig. 8 ist insbesondere als "core XY"-Anordnung ausgeführt, was eine effiziente additive Fertigung ermöglichen kann.

Die Auftragungseinheit 31 der Fig. 8 weist zwei Auftragungsdüsen 32, 33 auf, die zum Auftragen von Röntgenstrahlen-transparenten Material und Röntgenstrahlen-absorbierenden Material zur Bildung der Schichten 12, 13, 14 der Streustrahlungsmaske 10 verwendet werden können. Die Auftragungseinheit 31 kann entlang der Rahmenstruktur beweglich sein, was das Auftragen von Material über die gesamte Oberfläche des darunter liegenden Schichtstapels 11 ermöglichen kann. Die Auftragungseinheit 31 kann über mehrere Kabel oder Rohre verbunden sein. Diese können zur Versorgung der Auftragungseinheit 31 mit Materialien, Energie oder Steuersignalen dienen. Die Auftragungsdüsen 32, 33 können jeweils einen ovalen oder rechteckigen Querschnitt aufweisen.

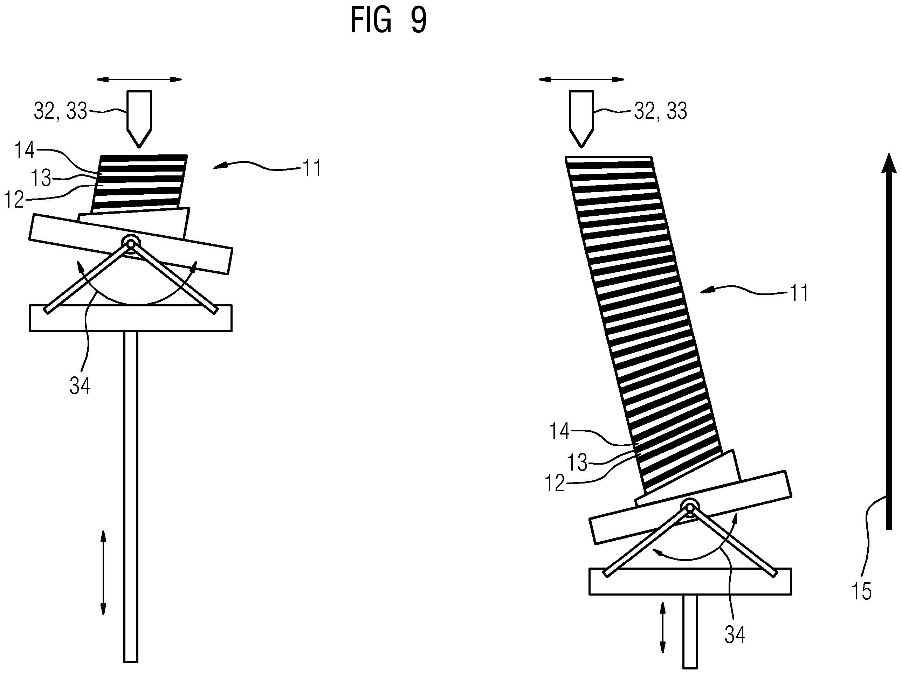

**Fig. 9** zeigt eine schematische Seitenansicht eines ersten Ausführungsbeispiels der Anlage. In der Fig. 9 sind zwei Konfigurationen der Anlage 30 zu zwei unterschiedlichen Zeitpunkten der Herstellung des Schichtstapels 11 enthalten.

Die Anlage 30 der Fig. 9 weist eine Kippvorrichtung 34 unterhalb des Schichtstapels 11 auf. Die Kippvorrichtung 34 ist dazu ausgebildet, den Kippwinkel des Schichtstapels 11 relativ zu den Auftragungsdüsen 32, 33 einzustellen. Die Kippvorrichtung 34 ist insbesondere dazu ausgebildet, den Kippwinkel der Auftragungseinheit 31 relativ zu einer bereits aufgetragenen Lage zu verändern.

In der linken Konfiguration ist die Platte, auf welcher der Schichtstapel 11 Lage für Lage aufgetragen wird, nach rechts geneigt. Die Auftragungsdüsen 32, 33 sind dazu ausgebildet, eine Lage auf eine bereits gefertigte Lage flächig aufzutragen. In der rechten Konfiguration hat die Kippvorrichtung 34 den Winkel des Schichtstapels 11 derart angepasst, so dass die Platte nach links geneigt ist. Die Kippvorrichtung 34 kann insbesondere für jede Lage einen unterschiedlichen Kippwinkel einstellen. Der Kippwinkel variiert typischerweise graduell von Lage zu Lage entlang der Stapelrichtung 15.

Die Auftragungsdüsen 32, 33 sind mit horizontalen Pfeilen dargestellt, was ihre seitliche Bewegung während des Auftragungsprozesses andeutet. Der Schichtstapel 11 zeigt in beiden Konfigurationen abwechselnd helle und dunkle Schichten, die die Röntgenstrahlen-transparenten Schichten 12, 14 und Röntgenstrahlen-absorbierenden Schichten 13 darstellen können.

Die Konstruktion der Anlage 30 kann die Herstellung von fokussierten Streustrahlungsmasken 10 ermöglichen, indem der Auftragungswinkel durch die Kippvorrichtung 34 eingestellt werden kann. Dies kann die Produktion von Masken mit variierenden Geometrien ermöglichen, um verschiedene Anforderungen der Röntgenbildgebung zu erfüllen. Diese Ausführungsform ist insbesondere vorteilhaft, wenn eine Dicke einer Lage oder jeder Lage des Schichtstapels 11 mittels des additiven Herstellungsverfahrens in Breitenrichtung variiert wird. Dadurch kann insbesondere eine fokussierte Streustrahlungsmaske gefertigt werden, bei der ein Querschnitt einer Lage oder jeder Lage in Breitenrichtung trapezförmig ausgebildet ist.

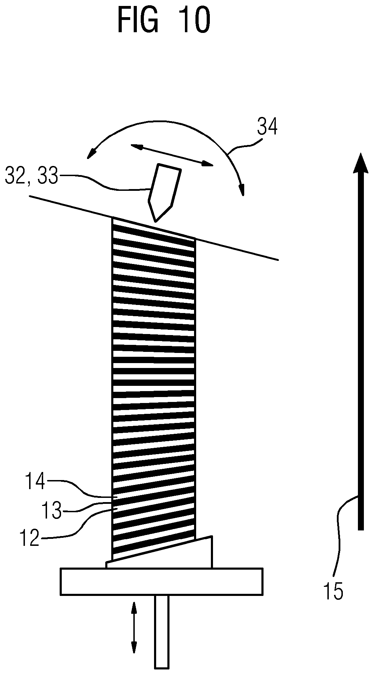

**Fig. 10** zeigt eine schematische Seitenansicht eines zweiten Ausführungsbeispiels der Anlage 30. Das Ausführungsbeispiel der Fig. 10 kann alternativ oder zusätzlich zum Ausführungsbeispiel der Fig. 9 sein.

Die Anlage 30 der Fig. 10 weist eine Kippvorrichtung 34 auf, welche dazu ausgebildet ist, mittels der Kippvorrichtung 34 einen Kippwinkel der Auftragungseinheit 31 relativ zu einer bereits aufgetragenen Lage zu verändern. In diesem Ausführungsbeispiel ist die Kippvorrichtung 34 beispielsweise zwischen der Rahmenstruktur und der Auftragungseinheit 31 angeordnet, so dass die Auftragungseinheit 31, insbesondere die beiden Auftragungsdüsen 32, 33 in Bezug auf die Stapelrichtung 15 verkippbar sind. Im Vergleich dazu sind die Auftragungsdüsen 32, 33 der Fig. 9 in Bezug auf die Stapelrichtung 15 nicht verkippbar, sondern die Platte mit dem Schichtstapel 11 sind in Bezug auf die Stapelrichtung 15 verkippbar.

**Fig. 11** zeigt eine Tabelle mit Materialien für die Röntgenstrahlen-absorbierenden Schichten. Die in der Tabelle aufgeführten Elemente können für die Röntgenstrahlen-absorbierende zweite Schicht der Streustrahlungsmaske verwendet werden. Die Materialzusammensetzung der zweiten Schicht kann Blei, Tantal, Wolfram, Rhenium, Osmium, Iridium, Bismut, Platin, Thallium, Quecksilber oder Gold aufweisen.

Die Tabelle in Fig. 11 weist fünf Spalten auf: Element, Ordnungszahl (atomic number), Chemisches Kurzzeichen (chemical symbol), Dichte in g/cm3 (density) und Notwendige Materialdicke in µm in Bezug auf Blei (necessary material thickness). Die Ordnungszahlen reichen von 73 für Tantal bis 83 für Bismut. Die Dichten reichen von 9,8 g/cm3 für Bismut bis 22,6 g/cm³ für Osmium sowie Iridium. Die notwendige Materialdicke im Vergleich zu Blei mit 20,0 µm reicht von 11,5 µm für Iridium bis 22,5 µm für Bismut.

Unabhängig vom grammatikalischen Geschlecht eines bestimmten Begriffes sind Personen mit männlicher, weiblicher oder anderer Geschlechteridentität mit umfasst.

Obwohl die Erfindung im Detail durch die bevorzugten Ausführungsbeispiele näher illustriert und beschrieben wurde, so ist die Erfindung dennoch nicht durch die offenbarten Beispiele eingeschränkt und andere Variationen können vom Fachmann hieraus abgeleitet werden, ohne den Schutzumfang der Erfindung zu verlassen.

## Patentansprüche

1. Streustrahlungsmaske (10) zur Reduktion von Röntgenstreustrahlung, insbesondere für eine Röntgenbildgebung, aufweisend
- einen Schichtstapel (11),
- wobei der Schichtstapel (11) eine Röntgenstrahlen-transparente erste Schicht (12), eine Röntgenstrahlen-absorbierende zweite Schicht (13) und eine Röntgenstrahlen-transparente dritte Schicht (14) aufweist,
- wobei die erste Schicht (12), die zweite Schicht (13) und die dritte Schicht (14) jeweils mindestens eine flächige Lage aufweisen,
- wobei benachbarte Lagen des Schichtstapels (11) mittels eines additiven Herstellungsverfahrens in Stapelrichtung (15) flächig aufeinander aufgetragen sind.

2. Streustrahlungsmaske (10) nach Anspruch 1,
wobei eine Dicke (12d) der zweiten Schicht (12) weniger als 200 µm, insbesondere weniger als 100 µm, beträgt.

3. Streustrahlungsmaske (10) nach einem der vorhergehenden Ansprüche wobei die Röntgenstrahlen-transparenten Schichten (12, 14) aus einer ersten Materialzusammensetzung und die Röntgenstrahlen-absorbierende Schicht (13) aus einer zweiten Materialzusammensetzung ausgebildet sind, wobei die erste Materialzusammensetzung und die zweite Materialzusammensetzung bezüglich eines Anteils eines Materials voneinander abweichend ausgebildet sind.

4. Streustrahlungsmaske (10) nach Anspruch 3,
wobei die erste Materialzusammensetzung Glashohlkugeln und/oder ein Aerogel aufweist.

5. Streustrahlungsmaske (10) nach einem der Ansprüche 3 oder 4,
wobei die zweite Materialzusammensetzung Blei, Tantal, Wolfram, Rhenium, Osmium, Iridium, Bismut, Platin, Thallium, Quecksilber oder Gold aufweist.

6. Streustrahlungsmaske (10) nach einem der Ansprüche 3 bis 5,
wobei die erste Materialzusammensetzung eine Kunststoff-Matrix aufweist und die zweite Materialzusammensetzung die gleiche Kunststoff-Matrix aufweist.

7. Streustrahlungsmaske (10) nach einem der vorhergehenden Ansprüche,
wobei die zweite Schicht (13) maximal eine Lage aufweist und/oder wobei die erste Schicht (12) und optional die dritte Schicht (14) jeweils maximal eine Lage aufweisen.

8. Streustrahlungsmaske (10) nach einem der vorhergehenden Ansprüche,
wobei eine Lage der ersten Schicht (12) und/oder der dritten Schicht (14) in Breitenrichtung einen Röntgenstrahlen-absorbierenden Streifen (16) aufweist.

9. Streustrahlungsmaske (10) nach Anspruch 8,
wobei sich Röntgenstrahlen-absorbierende Streifen (16) von benachbarten Lagen zu einer N-eckigen Struktur mit N ungleich 4 zusammensetzen.

10. Streustrahlungsmaske (10) nach einem der vorhergehenden Ansprüche,
wobei eine minimale Strukturgröße innerhalb einer Lage größer ist als eine minimale Dicke dieser Lage.

11. Streustrahlungsmaske (10) nach einem der vorhergehenden Ansprüche,
wobei ein Querschnitt einer Lage in Breitenrichtung trapezförmig ausgebildet ist.

12. Anordnung (20) für eine Röntgenbildgebung, aufweisend
- eine Streustrahlungsmaske (10) nach einem der vorhergehenden Ansprüche,
- eine Röntgenstrahlenquelle (21),
- einen Röntgendetektor (22) und
- einen Untersuchungsbereich (23) zwischen der Röntgenstrahlenquelle (21) und dem Röntgendetektor (22),
- wobei die Streustrahlungsmaske (10) zwischen dem Untersuchungsbereich (23) und dem Röntgendetektor (22) angeordnet und derart ausgerichtet ist, dass die Stapelrichtung (15) des Schichtstapels (11) parallel zum Röntgendetektor (22) ist.

13. Verfahren zur Herstellung einer Streustrahlungsmaske (10) zur Reduktion von Röntgenstreustrahlung, insbesondere für eine Röntgenbildgebung, umfassend die Schritte:
- Auftragen (S100, S101, S102) mittels eines additiven Herstellungsverfahrens von Lagen flächig aufeinander in Stapelrichtung zu einem Schichtstapel derart,
- dass der Schichtstapel (11) eine Röntgenstrahlen-transparente erste Schicht (12), eine Röntgenstrahlen-absorbierende zweite Schicht (13) und eine Röntgenstrahlen-transparente dritte Schicht (14) aufweist und
- dass die erste Schicht (12), die zweite Schicht (13) und die dritte Schicht (14) jeweils mindestens eine flächige Lage aufweisen.

14. Verfahren nach Anspruch 13,
wobei eine Dicke einer Lage des Schichtstapels (11) mittels des additiven Herstellungsverfahrens in Breitenrichtung variiert wird.

15. Anlage (30) zur additiven Herstellung einer Streustrahlungsmaske (10) zur Reduktion von Röntgenstreustrahlung, insbesondere für eine Röntgenbildgebung, aufweisend eine Auftragungseinheit (31), welche dazu ausgebildet ist, ein Herstellungsverfahren nach Anspruch 13 oder 14 durchzuführen.

16. Anlage (30) nach Anspruch 15,
wobei die Auftragungseinheit (31) mindestens eine Auftragungsdüse (32, 33) mit einem ovalen oder rechteckigen Querschnitt aufweist.

17. Anlage (30) nach einem der Ansprüche 15 oder 16,
wobei die Anlage (30) eine Kippvorrichtung (34) aufweist und wobei die Auftragungseinheit (30) sowie die Kippvorrichtung (34) derart angeordnet sind, dass mittels der Kippvorrichtung (34) ein Kippwinkel der Auftragungseinheit (31) relativ zu einer bereits aufgetragenen Lage veränderbar ist.

18. Verwendung einer Anlage (30) mit einer Auftragungseinheit (31) zur additiven Herstellung einer Streustrahlungsmaske (10) zur Reduktion von Röntgenstreustrahlung, insbesondere für eine Röntgenbildgebung, nach einem der Ansprüche 1 bis 11.
